# EUROPEAN PATENT APPLICATION

(11) **EP 4 745 865 A1**
(43) Date of publication of application: **20.05.2026**
(21) Application number: 24845837.4
(22) Date of filing: 27.06.2024
(51) Int. Cl.: G06Q 20/32, G06Q 20/40, G06Q 20/14, G06Q 20/02, G06F 3/01, H04W 4/80

(54) **ELECTRONIC DEVICE, METHOD, AND NON-TRANSITORY COMPUTER-READABLE STORAGE MEDIUM FOR MAKING PAYMENT**

(30) Priority: 25.07.2023 KR 20230097078; 25.08.2023 KR 20230112260
(71) Applicant: Samsung Electronics Co., Ltd., Suwon-si, Gyeonggi-do 16677 (KR)
(72) Inventor: JEONG, Heeyoung, Suwon-si, Gyeonggi-do 16677 (KR); KIM, Namin, Suwon-si, Gyeonggi-do 16677 (KR); PARK, Sunhwa, Suwon-si, Gyeonggi-do 16677 (KR); LEE, Insoo, Suwon-si, Gyeonggi-do 16677 (KR); JUNG, Hanseong, Suwon-si, Gyeonggi-do 16677 (KR)
(74) Representative: Gulde & Partner
(86) International application number: PCT/KR2024/008966
(87) International publication number: WO 2025/023533

(57) **Abstract**

Disclosed is an electronic device. The electronic device may be configured to acquire, in response to an input requesting payment, payment information related to the payment request. The electronic device may be configured to transmit data including the payment information to at least one external electronic device different from the electronic device via at least one communication circuit in response to obtaining the payment information, wherein the data causes the at least one external electronic device to display a screen, including at least a portion of the payment information, on a display of the at least one external electronic device. The electronic device may be configured to radiate a signal for payment based on data including the payment information to the outside via at least one communication circuit in response to acquiring the payment information.

## Description

### [Technical Field]

The following descriptions relate to an electronic device, a method, and a non-transitory computer-readable storage medium that perform payment.

### [Background Art]

An electronic device is implemented in various forms, such as a smartphone that may be carried by a user or a wearable device that may be attached to a part of a body of the user. This electronic device is rapidly becoming highly functional with development of information technology (IT) technology, and may provide the user with various functions.

The electronic device may provide the user with a payment service. For example, the electronic device may proceed payment by transmitting payment information to a payment device based on near field communication (NFC) or magnetic stripe transmission (MST).

### [Disclosure]

### [Technical Solution]

An electronic device is disclosed. The electronic device may comprise at least one communication circuitry. The electronic device may comprise at least one processor. The electronic device may comprise at least one memory storing instructions. The instructions may be configured, when executed by the at least one processor, to cause the electronic device to, in response to an input requesting payment, obtain payment information related to a payment request. The instructions may be configured, when executed by the at least one processor, to cause the electronic device to, in response to obtaining the payment information, transmit, via the at least one communication circuitry, to at least one external electronic device different from the electronic device, data including the payment information to cause the at least one external electronic device to display a screen including at least one piece of payment information on a display of the at least one external electronic device. The instructions may be configured, when executed by the at least one processor, to cause the electronic device to radiate a payment signal for the payment based on the data including the payment information to the outside via the at least one communication circuitry in response to obtaining the payment information.

A method is disclosed. The method may be performed by an electronic device comprising at least one communication circuitry. The method may comprise, in response to an input requesting payment, obtaining payment information related to a payment request. The method may comprise, in response to obtaining the payment information, transmitting, via at least one communication circuitry, to at least one external electronic device different from the electronic device, data including the payment information to cause the at least one external electronic device to display a screen including at least one piece of payment information on a display of the at least one external electronic device. The method may comprise radiating a payment signal for the payment based on the data including the payment information to the outside via the at least one communication circuitry in response to obtaining the payment information.

A non-transitory computer readable storage medium is disclosed. The non-transitory computer readable storage medium may comprise a program storing instructions. The instructions may be configured, when executed by at least one processor of an electronic device comprising at least one communication circuitry, to cause the electronic device to, in response to an input requesting payment, obtain payment information related to a payment request. The instructions may be configured, when executed by the at least one processor, to cause the electronic device to, in response to obtaining the payment information, transmit, via the at least one communication circuitry, to at least one external electronic device different from the electronic device, data including the payment information to cause the at least one external electronic device to display a screen including at least one piece of payment information on a display of the at least one external electronic device. The instructions may be configured, when executed by the at least one processor, to cause the electronic device to radiate a payment signal for the payment based on the data including the payment information to the outside via the at least one communication circuitry in response to obtaining the payment information.

An electronic device is disclosed. The electronic device may comprise a display. The electronic device may comprise at least one communication circuitry. The electronic device may comprise at least one processor. The electronic device may comprise at least one memory storing instructions. The instructions may be configured, when executed by the at least one processor, to cause the electronic device to receive, via the at least one communication circuitry, data including payment information from an external electronic device connected based on short-range wireless communication with the electronic device. The instructions may be configured, when executed by the at least one processor, to cause the electronic device to, based on receiving data including the payment information, display, on the display, a screen including at least one piece of payment information. The instructions may be configured, when executed by the at least one processor, to cause the electronic device to, while displaying the screen on the display, receive a request to radiate a signal for payment based on the data to the outside from the external electronic device. The instructions may be configured, when executed by the at least one processor, to cause the electronic device to, in response to receiving the request, radiate, via the at least one communication circuitry, the signal for the payment based on the data to the outside.

A method is disclosed. The method may be performed by an electronic device comprising a display, and at least one communication circuitry. The method may comprise receiving, via the at least one communication circuitry, data including payment information from an external electronic device connected based on short-range wireless communication with the electronic device. The method may comprise, based on the receiving, displaying, on the display, a screen including at least one piece of payment information. The method may comprise, while displaying the screen on the display, receiving a request to radiate a signal for payment based on the data to the outside from the external electronic device. The method may comprise, in response to receiving the request, radiating, via the at least one communication circuitry, the signal for the payment based on the data to the outside.

A non-transitory computer readable storage medium is disclosed. The non-transitory computer readable storage medium may comprise a program storing instructions. The instructions may be configured, when executed by at least one processor of an electronic device comprising a display and at least one communication circuitry, to cause the electronic device to, receive, via the at least one communication circuitry, data including payment information from an external electronic device connected based on short-range wireless communication with the electronic device. The instructions may be configured, when executed by the at least one processor, to cause the electronic device to, based on receiving data including the payment information, display, on the display, a screen including at least one piece of payment information. The instructions may be configured, when executed by the at least one processor, to cause the electronic device to, while displaying the screen on the display, receive a request to radiate a signal for payment based on the data to the outside from the external electronic device. The instructions may be configured, when executed by the at least one processor, to cause the electronic device to, in response to receiving the request, radiate, via the at least one communication circuitry, the signal for the payment based on the data to the outside.

### [Description of the Drawings]

FIG. 1 is a block diagram of an electronic device in a network environment according to various embodiments.
FIG. 2A is a block diagram of an electronic device in a payment environment.
FIG. 2B is a block diagram of an electronic device in a payment environment.
FIG. 3 is a flowchart illustrating an operation in which an electronic device obtains a token according to an embodiment.
FIG. 4 is a flowchart illustrating an operation in which an electronic device triggers an entry into a payment mode according to an embodiment.
FIG. 5 is a flowchart illustrating an operation in which an electronic device triggers another electronic device according to whether payment is successful according to an embodiment.
FIG. 6 is a flowchart illustrating an operation in which an electronic device triggers another electronic device according to whether payment is successful according to an embodiment.
FIG. 7 is a flowchart illustrating an operation in which an electronic device triggers other electronic devices according to whether payment of another electronic device is successful according to an embodiment.
FIG. 8 is a flowchart illustrating an operation in which an electronic device triggers other electronic devices according to whether payment of another electronic device is successful according to an embodiment.
FIG. 9 is a flowchart illustrating an operation in which another electronic device triggers other electronic devices according to whether payment is successful according to an embodiment.
FIG. 10 is a flowchart illustrating an operation in which another electronic device triggers other electronic devices according to whether payment is successful according to an embodiment.
FIG. 11 is a flowchart illustrating an operation in which another payment framework radiates a payment signal according to an embodiment.
FIG. 12 is a flowchart illustrating an operation in which another payment framework transmits a payment signal according to an embodiment.
FIG. 13 is a flowchart illustrating an operation in which another electronic device requests other electronic devices to display a message according to whether payment is successful.
FIG. 14A illustrates an example of a screen displayed by electronic devices according to an embodiment.
FIG. 14B illustrates an example of a screen displayed by electronic devices according to an embodiment.
FIG. 15A illustrates an example of a message displayed by electronic devices according to an embodiment.
FIG. 15B illustrates an example of a message displayed by electronic devices according to an embodiment.
FIG. 16 is a flowchart illustrating an operation in which an electronic device triggers an entry into a payment mode according to an embodiment.
FIG. 17 is a flowchart illustrating an operation in which an electronic device triggers payment of another electronic device according to an embodiment.
FIG. 18 is a flowchart illustrating an operation in which an electronic device triggers payment of another electronic device according to an embodiment.
FIG. 19 is a flowchart illustrating an operation in which an electronic device triggers payment of another electronic device according to an embodiment.

### [Mode for Invention]

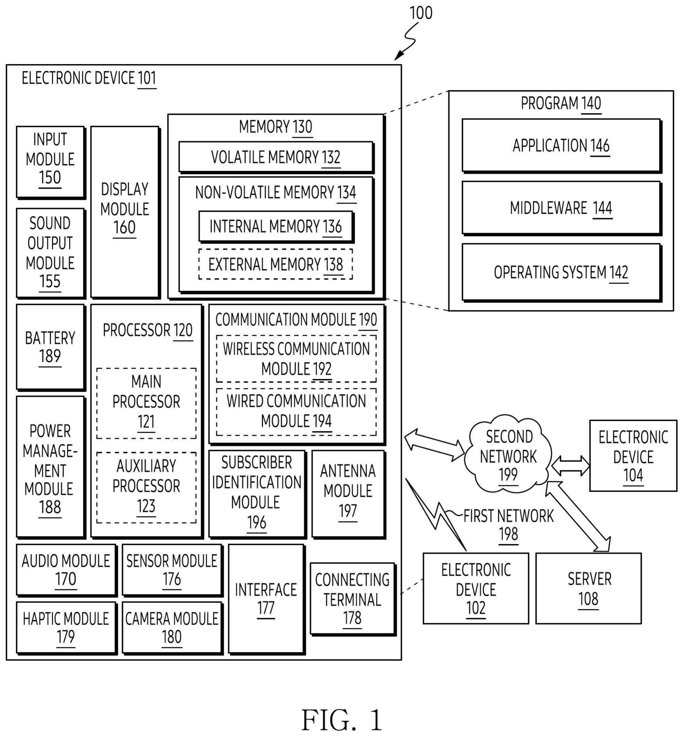

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

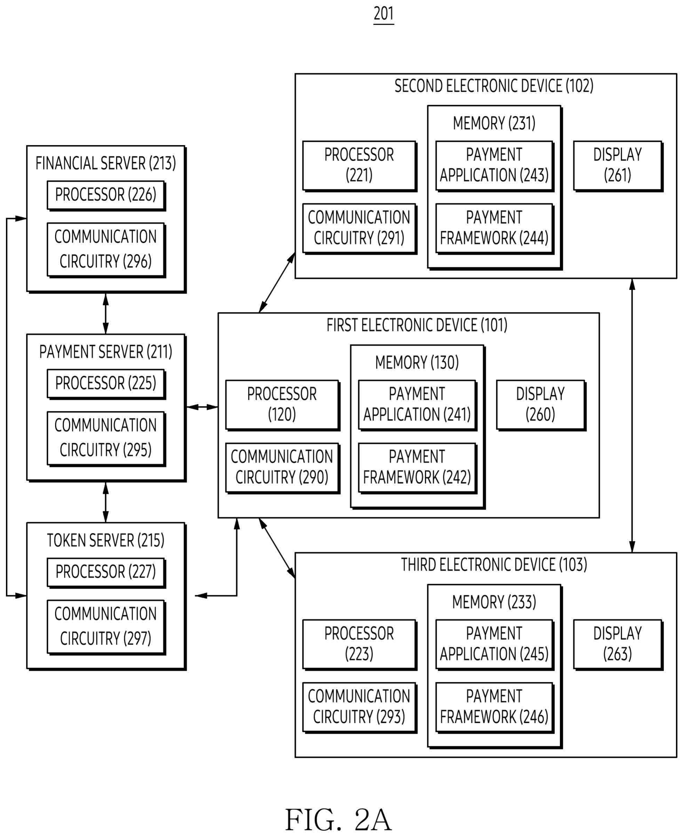

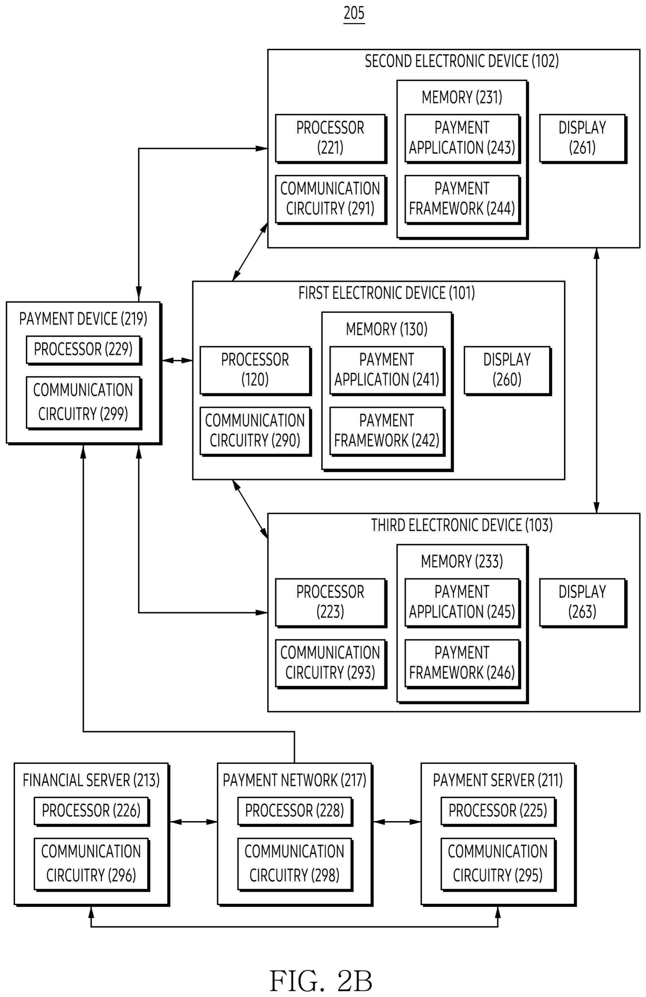

FIG. 2A is a block diagram of a first electronic device 101 in a payment environment 201. FIG. 2B is a block diagram of the first electronic device 101 in a payment environment 205.

Referring to FIGS. 2A and 2B, in payment environments 201 and 205, at least one of the first electronic device 101, a second electronic device 102, and a third electronic device 103 may be included. The first electronic device 101, the second electronic device 102, and the third electronic device 103 may be owned by a user. For example, the first electronic device 101, the second electronic device 102, and the third electronic device 103 may be electronic devices logged in to a payment server 211 as a user account of the user. However, it is not limited thereto. The first electronic device 101, the second electronic device 102, or the third electronic device 103 may be owned by two or more different users. Each of the first electronic device 101, the second electronic device 102, or the third electronic device 103 may be owned by one of the different owners, respectively. For example, the second electronic device 102 or the third electronic device 103 may be an electronic device that is previously authenticated and/or previously registered in the payment server 211 by the first electronic device 101. Herein, the second electronic device 102 or the third electronic device 103 being previously authenticated and/or previously registered in the payment server 211 may mean that the first electronic device 101 is registered in the payment server 211 so that payment may be processed by using information necessary for the payment obtained by the first electronic device 101 via the second electronic device 102 or the third electronic device 103.

At least two electronic devices among the first electronic device 101, the second electronic device 102, or the third electronic device 103 may be identified based on short-range communication (e.g., Bluetooth, Wi-Fi direct, or IrDA) with each other.

The first electronic device 101 may include a processor 120, memory 130, a display 260, and communication circuitry 290. The memory 130 may include a payment application 241 and a payment framework 242. The first electronic device 101 of FIGS. 2A and 2B may correspond to the first electronic device 101 of FIG. 1. The processor 120 of FIGS. 2A and 2B may correspond to the processor 120 of FIG. 1. The memory 130 of FIGS. 2A and 2B may correspond to the memory 130 of FIG. 1. The display 260 of FIGS. 2A and 2B may correspond to the display module 160 of FIG. 1. The communication circuitry 290 of FIGS. 2A and 2B may correspond to the communication module 190 of FIG. 1. The payment application 241 and the payment framework 242 of FIGS. 2A and 2B may be included in the program 140 of FIG. 1. For example, the payment application 241 may be included in the application 146 of FIG. 1. For example, the payment framework 242 may be included in the middleware 144 of FIG. 1. According to an embodiment, the display 260 may not be provided in the first electronic device 101.

The second electronic device 102 may include a processor 221, memory 231, a display 261, and communication circuitry 291. The memory 130 may include a payment application 243 and a payment framework 244. The second electronic device 102 of FIGS. 2A and 2B may correspond to the second electronic device 102 of FIG. 1. The processor 221 of FIGS. 2A and 2B may correspond to the processor 120 of FIG. 1. The memory 231 of FIGS. 2A and 2B may correspond to the memory 130 of FIG. 1. The display 261 of FIGS. 2A and 2B may correspond to the display module 160 of FIG. 1. The communication circuitry 291 of FIGS. 2A and 2B may correspond to the communication module 190 of FIG. 1. The payment application 243 and the payment framework 244 of FIGS. 2A and 2B may be included in the program 140 of FIG. 1. For example, the payment application 243 may be included in the application 146 of FIG. 1. For example, the payment framework 244 may be included in the middleware 144 of FIG. 1.

The third electronic device 103 may include a processor 223, memory 233, a display 263, and communication circuitry 293. The memory 130 may include a payment application 245 and a payment framework 246. The third electronic device 103 of FIGS. 2A and 2B may correspond to the first electronic device 101 or the second electronic device 102 of FIG. 1. The processor 223 of FIGS. 2A and 2B may correspond to the processor 120 of FIG. 1. The memory 233 of FIGS. 2A and 2B may correspond to the memory 130 of FIG. 1. The display 263 of FIGS. 2A and 2B may correspond to the display module 160 of FIG. 1. The communication circuitry 293 of FIGS. 2A and 2B may correspond to the communication module 190 of FIG. 1. The payment application 245 and the payment framework 246 of FIGS. 2A and 2B may be included in the program 140 of FIG. 1. For example, the payment application 245 may be included in the application 146 of FIG. 1. For example, the payment framework 246 may be included in the middleware 144 of FIG. 1.

Referring to FIG. 2A, the payment environment 201 may include the payment server 211, a financial server 213, and a token server 215. The payment server 211 may include a processor 225 and communication circuitry 295. The processor 225 of the payment server 211 may correspond to the processor 120 of FIG. 1. The communication circuitry 295 of the payment server 211 may correspond to the communication module 190 of FIG. 1. The financial server 213 may include a processor 226 and communication circuitry 296. The processor 226 of the financial server 213 may correspond to the processor 120 of FIG. 1. The communication circuitry 296 of the financial server 213 may correspond to the communication module 190 of FIG. 1. The token server 215 may include a processor 227 and communication circuitry 297. The processor 227 of the token server 215 may correspond to the processor 120 of FIG. 1. The communication circuitry 297 of the token server 215 may correspond to the communication module 190 of FIG. 1.

Referring to FIG. 2B, the payment environment 205 may include the payment server 211, the financial server 213, a payment network 217, and a payment device 219. The payment network 217 may include a processor 228 and communication circuitry 298. The processor 228 of the payment network 217 may correspond to the processor 120 of FIG. 1. The communication circuitry 298 of the payment network 217 may correspond to the communication module 190 of FIG. 1. The payment device 219 may include a processor 229 and communication circuitry 299. The processor 229 of the payment device 219 may correspond to the processor 120 of FIG. 1. The communication circuitry 299 of the payment device 219 may correspond to the communication module 190 of FIG. 1.

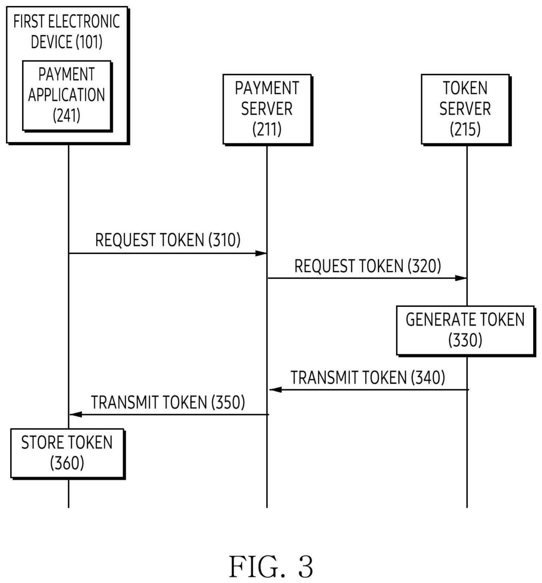

The first electronic device 101 may obtain information necessary for payment via the payment server 211. For example, the information necessary for payment may include information (e.g., at least one of a primary account number (PAN), a card expiration date, or a card verification value (CVV)) on a payment means (e.g., a credit card), and/or a token. The first electronic device 101 may obtain the information (e.g., the PAN, the card expiration date, or the CVV) on the payment means (e.g., the credit card) from the financial server 213 via the payment server 211. Herein, the financial server 213 may be a server for issuing a card to the user of the first electronic device 101 and managing information on the issued card. An operation of the first electronic device 101 obtaining the token may be described with reference to FIG. 3.

The payment server 211 may manage the user account, the information (e.g., the PAN, the card expiration date or the CVV) on the payment means (e.g., the credit card), and the token. The payment server 211 may be a server for providing a payment service to the user via the electronic devices 101, 102, and 103. The payment server 211 may be a management server for electronic payment and/or mobile payment. The payment server 211 may receive information associated with payment from the first electronic device 101, transmit the received information associated with the payment to the outside, or process it in the payment server 211. The payment server 211 may include a token requestor server. Herein, the token requestor server may transmit and receive information between the first electronic device 101 and the token server 215. The token requestor server may provide an interface for processing the information associated with the payment. For example, the token requestor server may issue, delete, or activate the information (e.g., token) associated with the payment.

The financial server 213 may perform issuing a card. The financial server 213 may generate information necessary for payment provided to the user. The user may store the information necessary for the payment generated by the financial server 213 in the first electronic device 101 by using the payment application 241. In addition, the financial server 213 may transmit and receive the information necessary for the payment by being functionally connected to the token server 215.

The token server 215 may issue and/or manage payment data (e.g., token). The token server 215 may perform a function associated with the token. Herein, the function associated with the token may include at least one of a token configuration, identification and verification (ID&V), replenishment, token generation, modification, deletion, or management of a life cycle. Herein, the token may be a value that replaces the PAN, which is information of the card. The token may be generated based on a bank identification number (BIN). In addition, the generated token may be encrypted by the financial server 213 or transmitted to the payment server 211 in an unencrypted state, and then encrypted by the payment server 211. Encrypted token information may be decrypted in the first electronic device 101 after being delivered to the first electronic device 101 via the payment server 211. However, it is not limited thereto. The token may be directly delivered from the token server 215 to the first electronic device 101 without going through the payment server 211.

The payment device 219 may be a point of sales (POS). The payment device 219 may obtain a payment signal outputted from at least one of the electronic devices 101, 102, and 103. For example, the payment device 219 may obtain a payment signal based on magnetic secure transmission (MST) and/or near field communication (NFC).

The payment device 219 may deliver the obtained payment signal to the payment server 211 and/or the financial server 213 via the payment network 217. Herein, the payment network 217 may deliver a signal obtained from the payment device 219 to a destination participating in the network.

FIG. 3 is a flowchart illustrating an operation in which a first electronic device 101 obtains a token according to an embodiment.

FIG. 3 may be described with reference to FIGS. 1, 2A, and 2B.

Referring to FIG. 3, in operation 310, a payment application 241 of the first electronic device 101 may request a token. The payment application 241 may request a token from a payment server 211. The payment application 241 may request a token corresponding to information (e.g., a primary account number (PAN)) on a payment means (e.g., a credit card) from the payment server 211. Herein, the token may be data based on the payment means. The token may be data generated based on information on the payment means. The token may be delivered between entities participating in payment during electronic payment. Herein, at least one of the information on the payment means, or the token may be referred to as payment information.

The payment server 211 may provide a service for the electronic payment and/or mobile payment. The payment server 211 may manage a user account or card information linked to the user account. The payment server 211 may perform issuing, deleting, or activating of data (e.g., token) associated with payment.

In operation 320, the payment server 211 may deliver a token request. The payment server 211 may request a token from a token server 215. The payment server 211 may request a token corresponding to the information (e.g., the PAN, a card expiration date, or a CVV) on the payment means (e.g., the credit card) from the token server 215. Herein, the token server 215 may manage the token. The token server 215 may issue and/or manage payment data (e.g., token). The token server 215 may perform a function associated with the token. Herein, the function associated with the token may include at least one of a token configuration, identification and verification (ID&V), replenishment, token generation, modification, deletion, or management of a life cycle.

In operation 330, the token server 215 may generate a token. The token server 215 may generate a token corresponding to the information (e.g., the PAN, the card expiration date, or the CVV) on the payment means (e.g., the credit card). Herein, the token may include at least one of a token identification (ID), a token expiration time, a token requestor ID, or a cryptogram. The token ID may include identification information of the token. The token expiration time may include information associated with a time when use of the token expires. The token requestor ID may include identification information associated with the first electronic device 101 and/or the payment server 211 that requested the token. The cryptogram may be data in which at least a portion of the token is encrypted. For example, the cryptogram may be generated based on a key for encrypting the at least a portion of the token. According to an embodiment, at least one of the information on the payment means, or the information (e.g., the token ID, the token expiration time, the token requestor ID, or the cryptogram, or the key) associated with the token may be referred to as payment information.

In operation 340, the token server 215 may transmit the token. The token server 215 may transmit the token to the payment server 211. The token server 215 may transmit the token corresponding to the information (e.g., the PAN, the card expiration date, or the CVV) on the payment means (e.g., the credit card) to the payment server 211. According to an embodiment, the token server 215 may transmit the token and a key to the payment server 211.

In operation 350, the payment server 211 may transmit the token. The payment server 211 may transmit the token to the payment application 241 of the first electronic device 101. The payment server 211 may transmit the token corresponding to the information (e.g., the PAN, the card expiration date, or the CVV) on the payment means (e.g., the credit card) to the payment application 241. According to an embodiment, the payment server 211 may transmit the token and the key to the payment application 241.

In operation 360, the payment application 241 may store the token. The payment application 241 may store the token in memory 130. The payment application 241 may store the token in a secure area (or a secure element (SE)) of the memory 130. The payment application 241 may store the token in an area managed by a trusted execution environment (TEE) of the memory 130. However, it is not limited thereto.

According to an embodiment, the payment application 241 may store a token and a key in the memory 130.

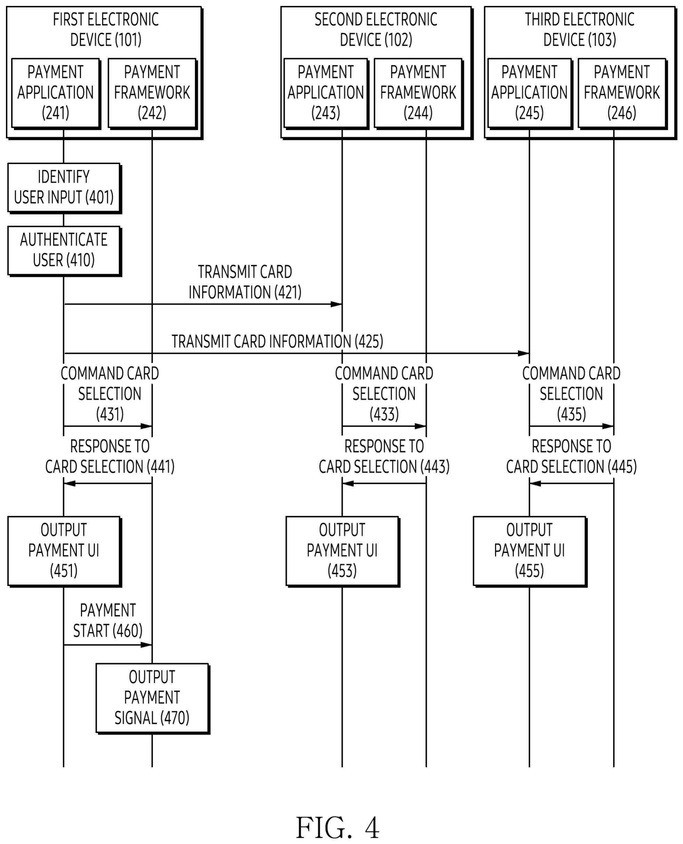

FIG. 4 is a flowchart illustrating an operation in which a first electronic device 101 triggers an entry into a payment mode according to an embodiment.

FIG. 4 may be described with reference to FIGS. 1, 2A, 2B and 3. According to an embodiment, operations of FIG. 4 may be performed while wireless communication is connected between electronic devices 101, 102, and 103. However, it is not limited thereto. For example, the first electronic device 101 may establish a wireless communication connection with other electronic devices 102 and 103 based on a user input according to operation 401 being identified. Thereafter, remaining operations of FIG. 4 may be performed. The wireless communication connection between the electronic devices 101, 102, and 103 may be based on short-range communication (e.g., Bluetooth, Wi-Fi direct, or IrDA).

The first electronic device 101, the second electronic device 102, and the third electronic device 103 may be owned by a user. For example, the first electronic device 101, the second electronic device 102, and the third electronic device 103 may be electronic devices logged in to a payment server 211 as a user account of the user. However, it is not limited thereto. The first electronic device 101, the second electronic device 102, or the third electronic device 103 may be owned by two or more different users. Each of the first electronic device 101, the second electronic device 102, or the third electronic device 103 may be owned by one of the different owners, respectively. For example, the second electronic device 102 or the third electronic device 103 may be an electronic device that is previously authenticated and/or previously registered in the payment server 211 by the first electronic device 101. Herein, the second electronic device 102 or the third electronic device 103 being previously authenticated and/or previously registered in the payment server 211 may mean that the first electronic device 101 is registered in the payment server 211 so that payment may be processed by using information necessary for the payment obtained by the first electronic device 101 via the second electronic device 102 or the third electronic device 103.

Referring to FIG. 4, in operation 401, a payment application 241 of the first electronic device 101 may identify a user input. The user input may be an input for requesting payment. The user input may be an input for identifying a card. However, it is not limited thereto. The user input may be an input used to authenticate the user. For example, the user input may include a gesture input. The gesture input may include a pattern input for authenticating the user. The user input may include a password for authenticating the user or an input for inputting a personal identification number (PIN). The user input may include an input of biometric information (e.g., an iris, or a fingerprint) of the user.

For example, the payment application 241 may identify the user input (or a user gesture) based on a sensor (e.g., the sensor module 176 of FIG. 1) and/or an input module (e.g., the input module 150 of FIG. 1) provided in the first electronic device 101.

The payment application 241 may identify a card corresponding to the user input. The payment application 241 may identify the card corresponding to the user input among a plurality of cards. The payment application 241 may identify the card indicated by the user input among the plurality of cards registered in association with the user account. Herein, the plurality of cards being registered in association with the user account may mean that they are registered in the payment server 211. The plurality of cards being registered in association with the user account may mean that the payment server 211 manages the plurality of cards in association with the user account.

In operation 410, the payment application 241 may authenticate the user. The payment application 241 may authenticate the user based on a user input. For example, the payment application 241 may authenticate the user based on whether the user input is a registered user input. For example, the payment application 241 may authenticate the user based on whether the user input is a registered gesture. Herein, the user input being registered may mean that data indicating the user input is registered in memory of the first electronic device 101. The user input being registered may mean that data indicating the user input is registered in a server (not illustrated) that manages authentication of the user. For example, the user may be authenticated by comparison between the user input and the registered data. However, it is not limited thereto. The payment application 241 may authenticate the user based on the biometric information (e.g., the iris or the fingerprint) of the user. For example, the payment application 241 may authenticate the user based on whether the biometric information is registered biometric information. Herein, the biometric information being registered may mean that data on the biometric information is registered in the memory of the first electronic device 101. The biometric information being registered may mean that the data on the biometric information is registered in the server (not illustrated) that manages the authentication of the user. For example, the user may be authenticated by comparison between the biometric information and the registered data. Herein, the payment application 241 may obtain the biometric information via the sensor (e.g., the sensor module 176 of FIG. 1). The payment application 241 may authenticate the user by comparing the obtained biometric information with pre-stored biometric information of the user. According to an embodiment, authentication on the biometric information may be performed via an external server (e.g., fast identity online (FIDO)).

In operation 421, the payment application 241 may transmit card information (e.g., PAN, a card expiration date, or a CVV). The payment application 241 may transmit the card information to a payment application 243 of the second electronic device 102. The payment application 241 may transmit at least one of the card information, a token ID, or an authentication result to the payment application 243. The payment application 241 may transmit at least one of the card information, the token ID, a token, a key, or the authentication result to the payment application 243. For example, the payment application 241 may transmit at least one of the card information, the token ID, the token, the key, or the authentication result to the payment application 243 via a command (e.g., deliverSelectCard). Herein, a parameter of the command (e.g., deliverSelectCard) may include at least one of the card information, the token, the token ID (tokenId), or the authentication result (fingerprint).

The payment application 241 may transmit data including payment information to the payment application 243 so that the payment application 243 of the second electronic device 102 displays information including at least one piece of the payment information on a display. Herein, the at least one piece of the payment information may include at least one of information on a payment means or information associated with a token (e.g., a token ID, a token expiration time, a token requestor ID, or a cryptogram, or a key). Herein, the information displayed on the display may include an image object with respect to a card selected by the user. The information displayed on the display may include an image object with respect to information (e.g., a time limit, or a signature) associated with payment of the card selected by the user.

In operation 425, the payment application 241 may transmit the card information (e.g., the PAN, the card expiration date, or the CVV). The payment application 241 may transmit the card information to a payment application 245 of the third electronic device 103. The payment application 241 may transmit at least one of the card information, the token ID, the token, the key, or the authentication result to the payment application 245. For example, the payment application 241 may transmit at least one of the card information, the token ID, the token, the key, or the authentication result to the payment application 245 via the command (e.g., deliverSelectCard).

In operation 431, the payment application 241 may command card selection. The payment application 241 may command the card selection to a payment framework 242. The payment application 241 may transmit a command for selecting a card including the card information to the payment framework 242. The payment application 241 may transmit at least one of the card information, the token ID, the token, the key, or the authentication result to the payment framework 242. For example, the payment application 241 may transmit at least one of the card information, the token ID, the token, the key, or the authentication result to the payment framework 242 via a command (e.g., selectCard). Herein, a parameter of the command (e.g., selectCard) may include at least one of the card information, the token, the token ID (tokenId), or the authentication result (fingerprint).

In operation 441, the payment framework 242 may transmit a response to the card selection. The payment framework 242 may transmit the response to the card selection to the payment application 241. For example, the payment framework 242 may notify the payment application 241 that the card selection is completed via the response (e.g., RESULT_CODE_SUCCESS). Herein, a parameter of a command (e.g., RESULT_CODE_SUCCESS) may include information on a previous state. Herein, the previous state may include information being displayed on the display. The previous state may include information, displayed on a display generated by an application running immediately before execution of the payment application 241. The previous state may include information displayed on a display generated by an activated application other than the payment application 241. The previous state may include information on an activity of a top screen of the first electronic device 101.

In operation 451, the payment application 241 may output a payment user interface (UI) on the display. Herein, the payment UI may include an image object with respect to a card selected by the user. The payment UI may include an image object with respect to information (e.g., a time limit, or a signature) associated with payment of the card selected by the user. However, it is not limited thereto. The payment UI may include a UI in a shape capable of interacting with the user. For example, the payment UI may be based on at least one of a graphic UI (GUI), a natural UI (e.g., haptic output), an audio UI (AUI) (e.g., sound output), or a physical UI (PUI) (or a tangible UI (TUI)). When the payment UI is based on the NUI, the payment application 241 may output a haptic based on a haptic module 179 based on receiving a card selection response. Herein, the payment application 241 may change a pattern of stimulation (e.g., mechanical stimulation or electrical stimulation) according to the selected card. When the payment UI is based on the AUI, the payment application 241 may output a sound signal based on a sound output module 155 based on receiving the card selection response. Herein, the payment application 241 may change a sound outputted according to the selected card.

The payment application 241 that outputs the payment UI may be identified as operating in a pre-payment mode. Herein, the pre-payment mode may mean a situation before a payment signal is outputted. The pre-payment mode may mean a situation in which the payment UI is outputted by the payment application 241.

In operation 433, the payment application 243 of the second electronic device 102 may command card selection. The payment application 243 may command the card selection to a payment framework 244. The payment application 243 may transmit a command for the card selection including card information to the payment framework 244. The payment application 243 may transmit at least one of card information, a token ID, a token, a key, or an authentication result to the payment framework 244. For example, the payment application 243 may transmit at least one of the card information, the token ID, the token, the key, or the authentication result to the payment framework 244 via a command (e.g., selectCard).

In operation 443, the payment framework 244 may transmit a response to the card selection. The payment framework 244 may transmit the response to the card selection to the payment application 243. For example, the payment framework 244 may notify the payment application 243 that the card selection is completed via the response (e.g., RESULT_CODE_SUCCESS). Herein, a parameter of a command (e.g., RESULT_CODE_SUCCESS) may include information on a previous state.

In operation 453, the payment application 243 may output a payment UI (or a payment display) on the display. Herein, the payment UI may include an image object with respect to a card selected by the user. The payment UI may include an image object with respect to information (e.g., a time limit, or a signature) associated with payment of the card selected by the user.

The payment application 243 may output the payment UI via a display 261. Herein, the payment UI may include a UI in a shape capable of interacting with the user. For example, the payment UI may be based on at least one of GUI, NUI, AUI, or PUI. When the payment UI is based on the NUI, the payment application 243 may output a haptic based on a haptic module (not illustrated) based on receiving a card selection response. When the payment UI is based on the AUI, the payment application 243 may output a sound signal based on a sound output module (not illustrated) based on receiving the card selection response.

The payment application 243 that outputs the payment UI may be identified as operating in a pre-payment mode. Herein, the pre-payment mode may mean a situation before a payment signal is outputted. The pre-payment mode may mean a situation in which the payment UI is outputted by the payment application 243.

In operation 435, the payment application 245 of the third electronic device 103 may command card selection. The payment application 245 may command the card selection to a payment framework 246. The payment application 245 may transmit a command for the card selection including card information to the payment framework 246. The payment application 245 may transmit at least one of card information, a token ID, a token, a key, or an authentication result to the payment framework 246. For example, the payment application 245 may transmit at least one of the card information, the token ID, the token, the key, or the authentication result to the payment framework 246 via a command (e.g., selectCard).

In operation 445, the payment framework 246 may transmit a response to the card selection. The payment framework 246 may transmit the response to the card selection to the payment application 245. For example, the payment framework 246 may notify the payment application 245 that the card selection is completed via the response (e.g., RESULT_CODE_SUCCESS). Herein, a parameter of a command (e.g., RESULT_CODE_SUCCESS) may include information on a previous state.

In operation 455, the payment application 245 may output a payment UI on a display. Herein, the payment UI may include a UI in a shape capable of interacting with the user. For example, the payment UI may be based on at least one of GUI, NUI, AUI, or PUI. When the payment UI is based on the NUI, the payment application 245 may output a haptic based on a haptic module (not illustrated) based on receiving a card selection response. When the payment UI is based on the AUI, the payment application 245 may output a sound signal based on a sound output module (not illustrated) based on receiving the card selection response.

The payment application 245 that outputs the payment UI may be identified as operating in a pre-payment mode. Herein, the pre-payment mode may mean a situation before a payment signal is outputted. The pre-payment mode may mean a situation in which the payment UI is outputted by the payment application 245.

In operation 460, the payment application 241 may command a payment start. The payment application 241 may command the payment start to the payment framework 242. The payment application 241 may transmit at least one of card information, a token ID, a token, a key, an authentication result, a payment configuration, or a callback method to the payment framework 242 via a command (e.g., StartPay). Herein, a parameter of the command (e.g., StartPay) may include at least one of the authentication result (secureObject), the payment configuration (payConfig), or the callback method (callback). Herein, the authentication result (secureObject) may be a value indicating whether user authentication is successful. The payment configuration (payConfig) may be a configuration value for determining a method of generating and/or outputting a signal based on a magnetic secure transmission (MST) and/or a near field communication (NFC). The callback method (callback) may designate a scheme (or an interface) for returning a result of performing payment. However, it is not limited thereto.

In operation 470, the payment framework 242 may output a payment signal. The payment framework 242 may radiate a payment signal based on the MST. The payment framework 242 may transmit a payment signal based on the NFC. The payment framework 242 may output a payment signal based on the MST and/or NFC. For example, the framework 242 may simultaneously output the payment signal based on the MST and the payment signal based on the NFC. For example, the framework 242 may sequentially output the payment signal based on the MST and the payment signal based on the NFC. For example, the framework 242 may output only one signal selected among the payment signal based on the MST or the payment signal based on the NFC.

The payment framework 242 may output a signal based on at least one of information on a payment means or information associated with a token (e.g., a token ID, a token expiration time, a token requestor ID, or a cryptogram, or a key). The payment framework 242 may output a signal including at least one of the information on the payment means or the information associated with the token (e.g., the token ID, the token expiration time, the token requestor ID, or the cryptogram, or the key).

Based on the payment framework 242 outputting a payment signal, the payment application 241 may output a UI. For example, the payment application 241 may output a UI indicating that the payment signal is being outputted. Herein, the UI indicating that the payment signal is being outputted may be based on at least one of GUI, NUI, and AUI. When the UI indicating that the payment signal is being outputted is based on the NUI, the payment application 241 may output a haptic based on the haptic module 179 while the payment signal is being outputted. When the UI indicating that a payment signal is being outputted is based on the NUI, the payment application 241 may output a sound signal based on the sound output module 155 while the payment signal is being outputted.

According to an embodiment, based on the payment framework 242 outputting the payment signal, the payment application 241 may request the other electronic devices 102 and 103 to output the UI indicating that the payment signal is being outputted. However, it is not limited thereto.

The payment application 241 that outputs the payment signal may be identified as operating in a payment mode. Herein, the payment mode may mean a situation in which the payment signal is outputted. The payment mode may mean a situation in which the payment signal is outputted by the payment framework 242.

As described above, the first electronic device 101 may provide the user with the convenience of performing payment via a plurality of devices with one authentication by displaying a UI for the payment to the other electronic devices 102 and 103 of the user when paying via a payment device 219.

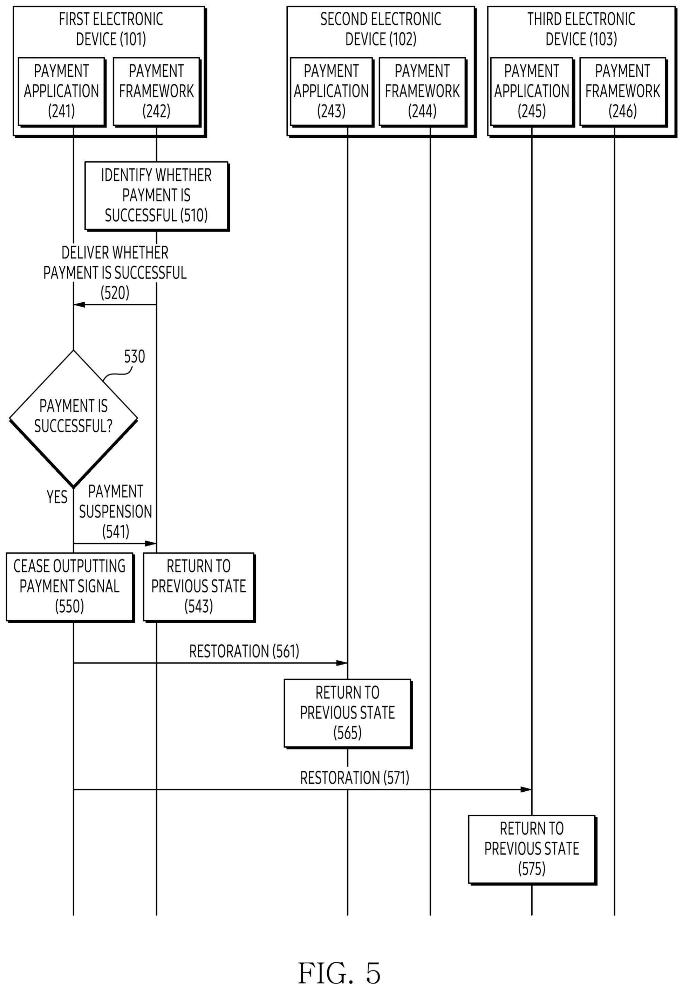

FIG. 5 is a flowchart illustrating an operation in which an electronic device triggers another electronic device according to whether payment is successful according to an embodiment.

FIG. 5 may be described with reference to FIGS. 1, 2A, 2B, 3 and 4.

Referring to FIG. 5, in operation 510, a payment framework 242 of a first electronic device 101 may identify whether payment is successful. The payment framework 242 may obtain a signal (e.g., a signal indicating that the payment has failed or a signal indicating that the payment is successful) indicating whether the payment is successful from a server associated with payment information. Herein, the server associated with the payment information may include at least one of a payment server 211, a financial server 213, a token server 215, a payment network 217, or a payment device 219.

The payment framework 242 may receive data indicating whether the payment is successful from at least one of the payment server 211, the financial server 213, the token server 215, the payment network 217, or the payment device 219. The payment framework 242 may identify whether the payment is successful based on the received data. For example, when the payment device 219 obtains a payment signal outputted via the operation 470 of FIG. 4, the payment signal obtained by the payment device 219 may be transmitted to the payment network 217, the financial server 213, the payment server 211, or the token server 215. Based on the payment signal, at least one of the payment server 211, the financial server 213, the token server 215, the payment network 217, or the payment device 219 may directly and/or indirectly transmit the data indicating whether the payment is successful to the payment framework 242. For example, when the payment signal is not received, the payment device 219 may directly transmit data indicating that the payment signal is not received to the payment framework 242. For example, when the at least one of the payment network 217, the financial server 213, the payment server 211, or the token server 215 does not succeed in payment based on the payment signal, the data indicating that the payment signal is not received may be transmitted indirectly to the payment framework 242 via the payment server 211.

In operation 520, the payment framework 242 may deliver whether the payment is successful. The payment framework 242 may deliver whether the payment is successful to a payment application 241. The payment framework 242 may deliver the data indicating whether the payment is successful to the payment application 241. The payment framework 242 may deliver a response including the data indicating whether the payment is successful to the payment application 241. Herein, the response may be RESULT_CODE_PAYMENT_SUCCESS, or RESULT_CODE_PAYMENT_FAILURE.

The payment application 241 receiving whether the payment is successful may be identified as operating in a post-payment mode. Herein, the post-payment mode may mean a situation after receiving whether the payment based on the payment signal is successful after outputting the payment signal.

In operation 530, the payment application 241 may determine whether the payment is successful. The payment application 241 may determine whether the payment is successful based on the data indicating whether the payment is successful. For example, the payment application 241 may determine whether the payment is successful based on a code included in the response. For example, when the response includes RESULT_CODE_PAYMENT_SUCCESS, the payment application 241 may determine that the payment is successful. For example, when the response includes RESULT_CODE_PAYMENT_FAILURE, the payment application 241 may determine that the payment has failed. Herein, an error code (failErrorCode) may be included in RESULT_CODE_PAYMENT_FAILURE. An error code as illustrated in Table 1 below or Table 2 below may be included in RESULT_CODE_PAYMENT_FAILURE. However, it is not limited thereto.

**[Table 1]**

| Error Code | Description |
|---|---|
| P-6 | Failure to save the last change time of a user's payment means |
| P-7 | Failure to retrieve the last change time a user's payment means |
| P-8 | Failure to retrieve information associated with a user's payment means |
| P-10 | Failure to initialize a user's payment means |
| P-11 | Failure to retrieve detailed information of a payment provider |
| P-12 | Failure to retrieve authentication information of a payment provider |
| P-13 | Failure to retrieve payment provider-user association information |
| P-14 | Failure of a payment provider to save a user's terms agreement status |
| P-15 | Failure of a payment provider to retrieve a user's terms agreement information |
| P-16 | Data encryption failure |
| P-17 | Data decryption failure |
| P-18 | Undefined internal server error |
| P-19 | Backend server error |
| P-20 | Backend interface connection error |
| P-21 | Database (DB) query error |
| P-22 | DB connection error |
| P-23 | Payment provider error not defined in a payment service |
| P-24 | Failure to retrieve authentication information of a user's payment means |
| P-25 | User payment means authentication session timeout |

**[Table 2]**

| Error Code | Description |
|---|---|
| C-20 | Undefined payment gateway (PG) identity verification agency error |
| C-21 | Service unavailable for PG identity verification (check with a service administrator of a payment service) |
| C-22 | Failure to send PG authentication code (please try again later) |
| C-23 | PG identity verification carrier server under maintenance (please try again later) |
| C-24 | Service delay due to high volume of PG identity verification users (please try again later) |
| C-25 | Identity verification failure (information mismatch between a mobile phone user and a payment means user) |
| C-26 | Payment service account server response error |
| C-27 | A server identity verification encryption/decryption error |
| C-28 | Payment service account error issued by A server identity verification |
| C-29 | Undefined A server identity verification agency error |
| C-30 | CI identity verification agency system error |
| C-31 | Payment service account error issued by B server identity verification |
| C-32 | C server identity verification pending |
| C-33 | C server normal authentication already confirmed |
| C-34 | C server identity verification failure |
| C-35 | C server transaction information not found (mobile ID mismatch) |
| C-36 | C server authentication timeout |
| C-37 | C server undefined error |

Based on determining that the payment is successful, the payment application 241 may perform operation 541. Based on determining that the payment is successful, the payment application 241 may perform operation 550. An execution order of the operation 541 and the operation 550 may be changed.

In operation 541, the payment application 241 may command payment suspension. The payment application 241 may command the payment suspension to the payment framework 242. The payment application 241 may command the payment suspension to the payment framework 242 via a command (StopPay).

In operation 543, the payment framework 242 may cease outputting a payment signal. The payment framework 242 may cease radiating a payment signal based on MST. The payment framework 242 may cease transmitting a payment signal based on NFC. The payment framework 242 may cease outputting a payment signal based on the MST and/or the NFC.

In operation 550, the payment application 241 may return to a previous state. For example, the payment application 241 may return to the previous state based on information on the previous state. For example, the payment application 241 may display a previously displayed screen on a display based on the information on the previous state. Herein, the information on the previous state may be obtained via the operation 441 of FIG. 4.

In operation 561, the payment application 241 may command restoration. The payment application 241 may command the restoration to a payment application 243. The payment application 241 may command the restoration to the payment application 243 via a command (Restore). Herein, the payment application 241 may transmit the restoration command (or restoration request) to the payment application 243, so that the payment application 243 of a second electronic device 102 ceases displaying a display (or a payment UI).

In operation 565, the payment application 243 may return to a previous state. For example, the payment application 243 may return to the previous state based on information on the previous state. For example, the payment application 243 may display a previously displayed screen on a display based on the information on the previous state. Herein, the information on the previous state may be obtained via the operation 443 of FIG. 4.

In operation 571, the payment application 241 may command restoration. The payment application 241 may command the restoration to a payment application 245. The payment application 241 may command the restoration to the payment application 245 via a command (Restoration). Herein, the payment application 241 may transmit the restoration command (or restoration request) to the payment application 245, so that the payment application 245 of a third electronic device 103 ceases displaying a display (or a payment UI).

In operation 575, the payment application 243 may return to the previous state. For example, the payment application 245 may return to the previous state based on information on the previous state. For example, the payment application 245 may display a previously displayed screen on the display based on the information on the previous state. Herein, the information on the previous state may be obtained via the operation 445 of FIG. 4.

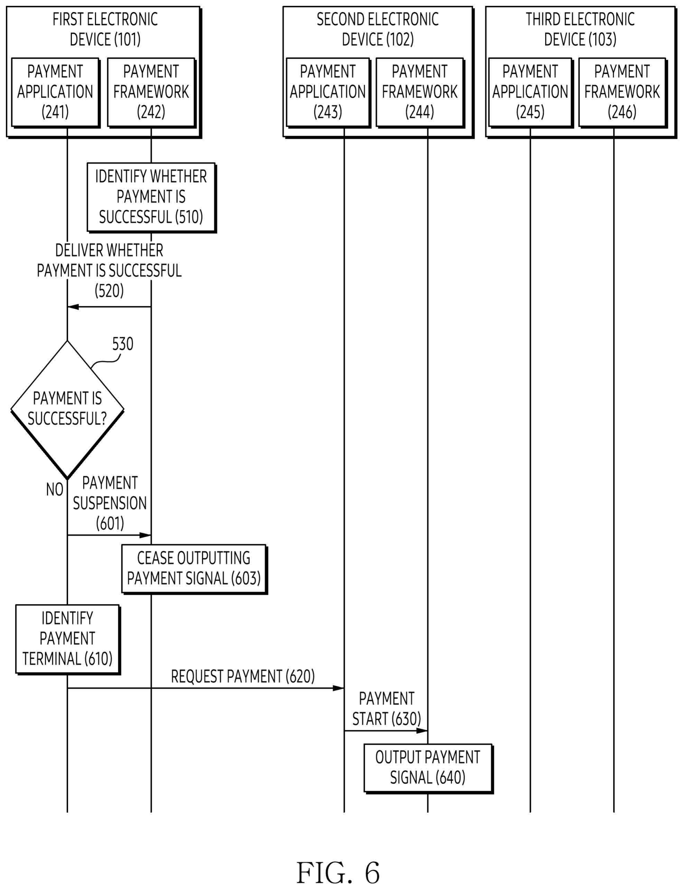

FIG. 6 is a flowchart illustrating an operation in which an electronic device triggers another electronic device according to whether payment is successful according to an embodiment.

FIG. 6 may be described with reference to FIGS. 1, 2A, 2B, 3, 4 and 5. Operations 510, 520, 530, 541, and 543 of FIG. 6 may correspond to the operations 510, 520, 530, 541, and 543 of FIG. 5, respectively.

Referring to FIG. 6, in the operation 510, a payment framework 242 of a first electronic device 101 may identify whether payment is successful.

In the operation 520, the payment framework 242 may deliver whether the payment is successful.

In the operation 530, a payment application 241 may determine whether the payment is successful.

Based on determining that the payment has failed, the payment application 241 may perform operation 601. The payment application 241 may perform operation 610 based on determining that the payment has failed. An execution order of the operation 601 and the operation 610 may be changed.

In the operation 601, the payment application 241 may command payment suspension. The payment application 241 may command the payment suspension to the payment framework 242. The payment application 241 may command the payment suspension to the payment framework 242 via a command (StopPay).

In operation 603, the payment framework 242 may cease outputting a payment signal. The payment framework 242 may cease radiating a payment signal based on MST. The payment framework 242 may cease transmitting a payment signal based on NFC. The payment framework 242 may cease outputting a payment signal based on the MST and/or the NFC.

In operation 610, the payment application 241 may identify a payment terminal. Herein, the payment terminal may be one of electronic devices 101, 102, and 103 of a user. For example, the payment terminal may be one of the electronic devices 102 and 103 other than the first electronic device 101.

In an embodiment, the payment application 241 may identify the payment terminal based on a priority of the electronic devices 101, 102, and 103 of the user. Herein, the priority may be determined by the user. For example, the priority may be determined based on a frequency of use of each of the electronic devices 101, 102, and 103. For example, the priority may be determined based on a frequency of payment of each of the electronic devices 101, 102, and 103. For example, a priority of an electronic device having a higher frequency of payment may be set to be higher. However, it is not limited thereto. For example, the priority may be determined based on a payment history. For example, a priority of an electronic device that has made payment more recently may be set to be higher.

In an embodiment, the payment application 241 may identify the payment terminal based on a priority of a running application in each of the electronic devices 101, 102, and 103. Herein, the priority of the application may be determined by a type of service provided by the application. For example, a priority of an electronic device executing the application in a foreground may be lower than a priority of an electronic device executing the application in a background. For example, the priority of the electronic device executing the application in the background may be lower than a priority of an electronic device that does not execute the application included in an application layer. However, it is not limited thereto. As for the priority of the application, a priority of a pre-designated application may be lower than a priority of other applications. For example, as for the priority of the application, a priority of an electronic device providing a service (e.g., phone, game, content viewing) that requires immediate interaction of concentration of the user may be lower than a priority of an electronic device providing a service that requires other services (e.g., jogging path tracking).

In an embodiment, the payment application 241 may identify the payment terminal based on an error code. For example, the payment application 241 may identify a terminal that has performed payment when the same error code occurs, as the payment terminal.

In an embodiment, the payment application 241 may identify the payment terminal based on a payment device 219. For example, when the payment device 219 supports any one payment means of the MST or the NFC, a terminal capable of outputting a payment signal of the supported payment means may be identified as the payment terminal.

In operation 620, the payment application 241 may request payment. The payment application 241 may request the payment from a payment application 243. The payment application 241 may request the payment from the payment application 243 via a command (TossPay). Herein, a parameter of the command (TossPay) may include at least one of an authentication result (secureObject), a payment configuration (payConfig), a callback method (callback), or an error code. Herein, the authentication result (secureObject) may be a value indicating whether user authentication is successful. The payment configuration (payConfig) may be a configuration value for determining a method of generating and/or outputting a signal based on the MST and/or the NFC. The callback method (callback) may designate a scheme (or an interface) for returning a result of performing payment. The error code (failErrorCode) may be a value for indicating a reason for failure of the payment. The error code may include an error code illustrated in Table 1 and an error code illustrated in Table 2. However, it is not limited thereto.

In operation 630, the payment application 243 may command a payment start. The payment application 243 may command the payment start to a payment framework 244. The payment application 243 may transmit at least one of card information, a token ID, a token, a key, an authentication result, a payment configuration, or a callback method to the payment framework 244 via a command (e.g., StartPay). Herein, a parameter of the command (e.g., StartPay) may include at least one of the authentication result (secureObject), the payment configuration (payConfig), or the callback method (callback). Herein, the authentication result (secureObject) may be a value indicating whether user authentication is successful. The payment configuration (payConfig) may be a configuration value for determining a method of generating and/or outputting a signal based on the MST and/or the NFC. For example, when an error code (failErrorCode) indicates P-16 (data encryption failure) or P-17 (data decryption failure), the payment configuration (payConfig) may indicate a configuration value for changing an encryption technique and/or a decryption technique. The callback method (callback) may designate a scheme (or an interface) for returning a result of performing payment. However, it is not limited thereto.

In operation 640, the payment framework 244 may output a payment signal. The payment framework 244 may radiate a payment signal based on the MST. The payment framework 244 may transmit a payment signal based on the NFC. The payment framework 244 may output a payment signal based on the MST and/or the NFC. For example, the framework 244 may simultaneously output the payment signal based on the MST and the payment signal based on the NFC. For example, the framework 244 may sequentially output the payment signal based on the MST and the payment signal based on the NFC. For example, the framework 244 may output only one signal selected among the payment signal based on the MST or the payment signal based on the NFC.

The payment framework 244 may generate a payment signal based on the MST and/or the NFC, based on the payment configuration (payConfig). For example, when generating the payment signal based on the MST, the payment framework 244 may change an output method of a sequence based on Track 1, Track 2, or Track 3, based on the payment configuration (payConfig). For example, when generating the payment signal based on the MST, the payment framework 244 may adjust an idle interval between radiation time points of the payment signal, based on the payment configuration (payConfig). However, it is not limited thereto. For example, based on payment based on a failure of a communication protocol (e.g., the MST) among the MST or the NFC, the payment framework 244 may perform payment based on another communication protocol (e.g., the NFC). Herein, information on the communication protocol (e.g., the MST) that has failed may be included in the payment configuration (payConfig).

The payment application 243 that outputs the payment signal may be identified as operating in a payment mode. Herein, the payment mode may mean a situation in which the payment signal is outputted. The payment mode may mean a situation in which the payment signal is outputted by the payment framework 244.

As described above, when payment fails via the payment device 219 by the first electronic device 101, it may provide the user with convenience of performing the payment via a plurality of devices with one authentication by attempting the payment via the other electronic devices 102 and 103 of the user without additional authentication.

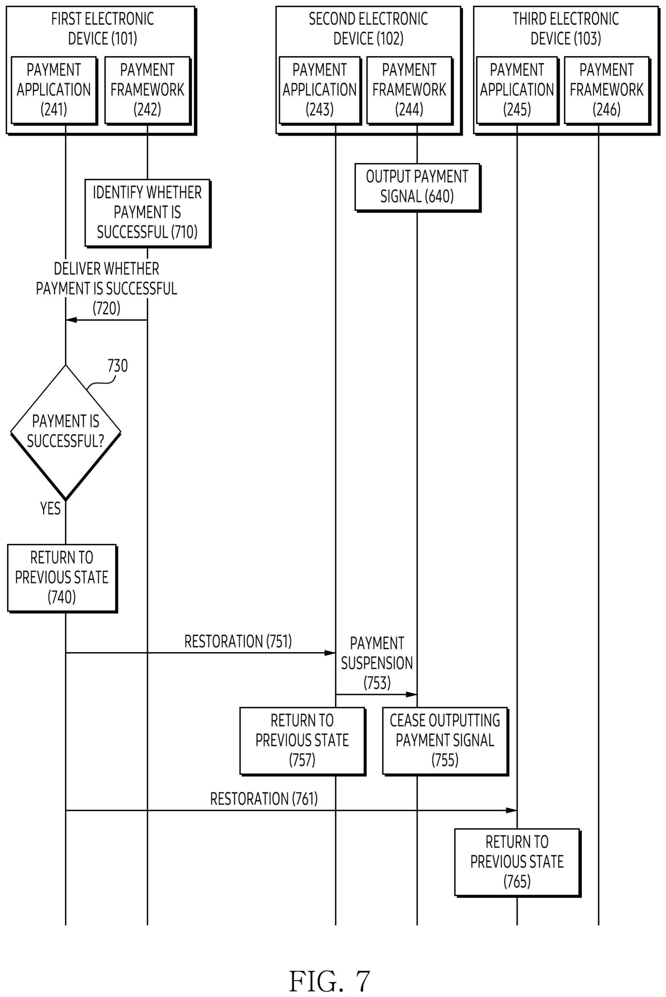

FIG. 7 is a flowchart illustrating an operation in which an electronic device triggers other electronic devices according to whether payment of another electronic device is successful according to an embodiment.

FIG. 7 may be described with reference to FIGS. 1, 2A, 2B, 3, 4, 5 and 6. Operation 640 of FIG. 7 may correspond to the operation 640 of FIG. 6.

Referring to FIG. 7, in the operation 640, a payment framework 244 of a second electronic device 102 may output a payment signal.

In operation 710, a payment framework 242 of a first electronic device 101 may identify whether payment is successful. The payment framework 242 may receive data indicating whether the payment is successful from at least one of a payment server 211, a financial server 213, a token server 215, a payment network 217, or a payment device 219. The payment framework 242 may identify whether the payment is successful based on the received data.

In operation 720, the payment framework 242 may deliver whether the payment is successful. The payment framework 242 may deliver whether the payment is successful to a payment application 241. The payment framework 242 may deliver the data indicating whether the payment is successful to the payment application 241. The payment framework 242 may deliver a response including the data indicating whether the payment is successful to the payment application 241.

The payment application 241 receiving whether the payment is successful may be identified as operating in a post-payment mode. Herein, the post-payment mode may mean a situation after receiving whether the payment based on the payment signal is successful after outputting the payment signal.

In operation 730, the payment application 241 may determine whether the payment is successful. The payment application 241 may determine whether the payment is successful based on the data indicating whether the payment is successful. For example, the payment application 241 may determine whether the payment is successful based on a code included in the response. For example, when the response includes RESULT_CODE_PAYMENT_SUCCESS, the payment application 241 may determine that the payment is successful. For example, when the response includes RESULT_CODE_PAYMENT_FAILURE, the payment application 241 may determine that the payment has failed. Herein, an error code (failErrorCode) may be included in RESULT_CODE_PAYMENT_FAILURE. An error code as illustrated in Table 1 below or Table 2 below may be included in RESULT_CODE_PAYMENT_FAILURE.

Based on determining that the payment is successful, the payment application 241 may perform operation 740.

In the operation 740, the payment application 241 may return to a previous state. For example, the payment application 241 may return to the previous state based on information on the previous state. For example, the payment application 241 may display a previously displayed screen based on the information on the previous state. Herein, the information on the previous state may be obtained via the operation 441 of FIG. 4.

In operation 751, the payment application 241 may command restoration. The payment application 241 may command the restoration to a payment application 243. The payment application 241 may command the restoration to the payment application 243 via a command (Restore).

The payment application 243 receiving the restoration command may be identified as operating in a post-payment mode. Herein, the post-payment mode may mean a situation after receiving whether the payment based on the payment signal is successful after outputting the payment signal.

In operation 753, the payment application 243 may command payment suspension. The payment application 243 may command the payment suspension to the payment framework 244. The payment application 243 may command the payment suspension to the payment framework 244 via a command (StopPay).

In operation 755, the payment application 243 may cease outputting a payment signal. The payment framework 244 may cease radiating a payment signal based on MST. The payment framework 244 may cease transmitting a payment signal based on NFC. The payment framework 244 may cease outputting a payment signal based on the MST and/or the NFC.

In operation 757, the payment application 243 may return to a previous state. For example, the payment application 243 may return to the previous state based on information on the previous state. For example, the payment application 243 may display a previously displayed screen on a display based on the information on the previous state. Herein, the information on the previous state may be obtained via the operation 443 of FIG. 4.

In operation 761, the payment application 241 may command restoration. The payment application 241 may command the restoration to a payment application 245. The payment application 241 may command the restoration to the payment application 245 via a command (Restore).

The payment application 245 receiving the restoration command may be identified as operating in a post-payment mode. Herein, the post-payment mode may mean a situation after receiving whether the payment based on the payment signal is successful after outputting the payment signal.

In operation 765, the payment application 243 may return to a previous state. For example, the payment application 245 may return to the previous state based on information on the previous state. For example, the payment application 245 may display a previously displayed screen on a display based on the information on the previous state. Herein, the information on the previous state may be obtained via the operation 445 of FIG. 4.

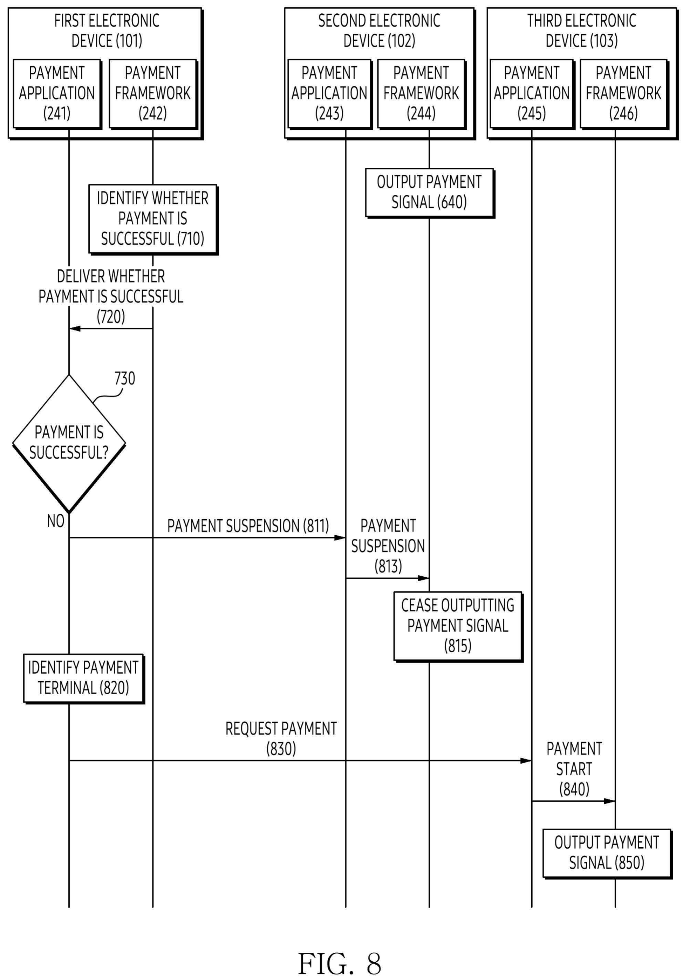

FIG. 8 is a flowchart illustrating an operation in which an electronic device triggers other electronic devices according to whether payment of another electronic device is successful according to an embodiment.

FIG. 8 may be described with reference to FIGS. 1, 2A, 2B, 3, 4, 5, 6, and 7. Operation 640 of FIG. 8 may correspond to the operation 640 of FIGS. 6 or 7. Operations 710, 720, and 730 of FIG. 8 may correspond to the operations 710, 720, and 730 of FIG. 7.

Referring to FIG. 8, in the operation 640, a payment framework 244 of a second electronic device 102 may output a payment signal.

In the operation 710, a payment framework 242 of a first electronic device 101 may identify whether payment is successful.

In the operation 720, the payment framework 242 may deliver whether the payment is successful.

In the operation 730, a payment application 241 may determine whether the payment is successful.

Based on determining that the payment has failed, the payment application 241 may perform operation 811.

In the operation 811, the payment application 241 may command payment suspension. The payment application 241 may command the payment suspension to a payment application 243. The payment application 241 may command the payment suspension to the payment application 243 via a command (StopPay).

The payment application 243 receiving the payment suspension command may be identified as operating in a post-payment mode. Herein, the post-payment mode may mean a situation after receiving whether the payment based on the payment signal is successful after outputting the payment signal.

In operation 813, the payment application 243 of the second electronic device 102 may command payment suspension. The payment application 243 may command the payment suspension to the payment framework 244. The payment application 243 may command the payment suspension to the payment framework 244 via a command (StopPay).

In operation 815, the payment framework 244 may cease outputting a payment signal. It may cease outputting a payment signal. The payment framework 244 may cease radiating a payment signal based on MST. The payment framework 244 may cease transmitting a payment signal based on NFC. The payment framework 244 may cease outputting a payment signal based on the MST and/or the NFC.

In operation 820, the payment application 241 may identify a payment terminal. In an embodiment, the payment application 241 may identify the payment terminal based on a priority of electronic devices 101, 102, and 103 of a user. In an embodiment, the payment application 241 may identify the payment terminal based on a priority of an application running in each of the electronic devices 101, 102, and 103. In an embodiment, the payment application 241 may identify the payment terminal based on an error code. In an embodiment, the payment application 241 may identify the payment terminal based on a payment device 219.

In operation 830, the payment application 241 may request payment. The payment application 241 may request the payment from a payment application 245. The payment application 241 may command the payment application 245 to request the payment via a command (TossPay). Herein, a parameter of the command (TossPay) may include at least one of an authentication result (secureObject), a payment configuration (payConfig), a callback method (callback), or an error code. Herein, the authentication result (secureObject) may be a value indicating whether user authentication is successful. The payment configuration (payConfig) may be a configuration value for determining a method of generating and/or outputting a signal based on the MST and/or the NFC. The callback method (callback) may designate a scheme (or an interface) for returning a result of performing payment. The error code (failErrorCode) may be a value for indicating a reason for failure of the payment. The error code may include an error code illustrated in Table 1 and an error code illustrated in Table 2. However, it is not limited thereto.

In operation 840, the payment application 245 of the third electronic device 103 may command a payment start. The payment application 245 may command the payment start to a payment framework 246. The payment application 245 may transmit at least one of card information, a token ID, a token, a key, an authentication result, a payment configuration, or a callback method to the payment framework 246 via a command (e.g., StartPay). Herein, a parameter of the command (e.g., StartPay) may include at least one of the authentication result (secureObject), the payment configuration (payConfig), or the callback method (callback). Herein, the authentication result (secureObject) may be a value indicating whether user authentication is successful. The payment configuration (payConfig) may be a configuration value for determining a method of generating and/or outputting a signal based on the MST and/or the NFC. The callback method (callback) may designate a scheme (or an interface) for returning a result of performing payment. However, it is not limited thereto.

In operation 850, the payment framework 246 may output a payment signal. The payment framework 246 may radiate a payment signal based on the MST. The payment framework 246 may transmit a payment signal based on the NFC. The payment framework 246 may output a payment signal based on the MST and/or the NFC. For example, the framework 246 may simultaneously output the payment signal based on the MST and the payment signal based on the NFC. For example, the framework 246 may sequentially output the payment signal based on the MST and the payment signal based on the NFC. For example, the framework 246 may output only one signal selected among the payment signal based on the MST or the payment signal based on the NFC.

The payment framework 246 may generate a payment signal based on the MST and/or the NFC based on the payment configuration (payConfig).

According to an embodiment, when the payment has failed based on the payment signal outputted by the payment framework 246, the payment application 241 may determine whether to retry the payment according to the error code (failErrorCode).

For example, when the error code (failErrorCode) indicates a failure (e.g., P-6, P-7, P-8, or P-10) associated with a payment means, the payment application 241 may perform processing associated with the payment means. For example, when the error code (failErrorCode) indicates the failure associated with the payment means, the payment application 241 may retrieve information of the payment means or re-store (or update) the information of the payment means.

For example, when the error code (failErrorCode) indicates a failure (e.g., P-14 or P-15) associated with whether the user agrees, the payment application 241 may perform processing associated with the consent of the user. For example, when the error code (failErrorCode) indicates the failure associated with whether the user agrees, the payment application 241 may display a UI requesting the user for the consent.

For example, when the error code (failErrorCode) indicates a failure (e.g., P-18, P-19, P-20, P-21, P-22, or P-23) associated with a server, the payment application 241 may output a notification indicating that there is an error associated with the server. For example, when the error code (failErrorCode) indicates the failure associated with the server, the payment application 241 may display a UI indicating difficulty in payment by the server.

The payment application 245 that outputs the payment signal may be identified as operating in a payment mode. Herein, the payment mode may mean a situation in which the payment signal is outputted. The payment mode may mean a situation in which the payment signal is outputted by the payment framework 246.

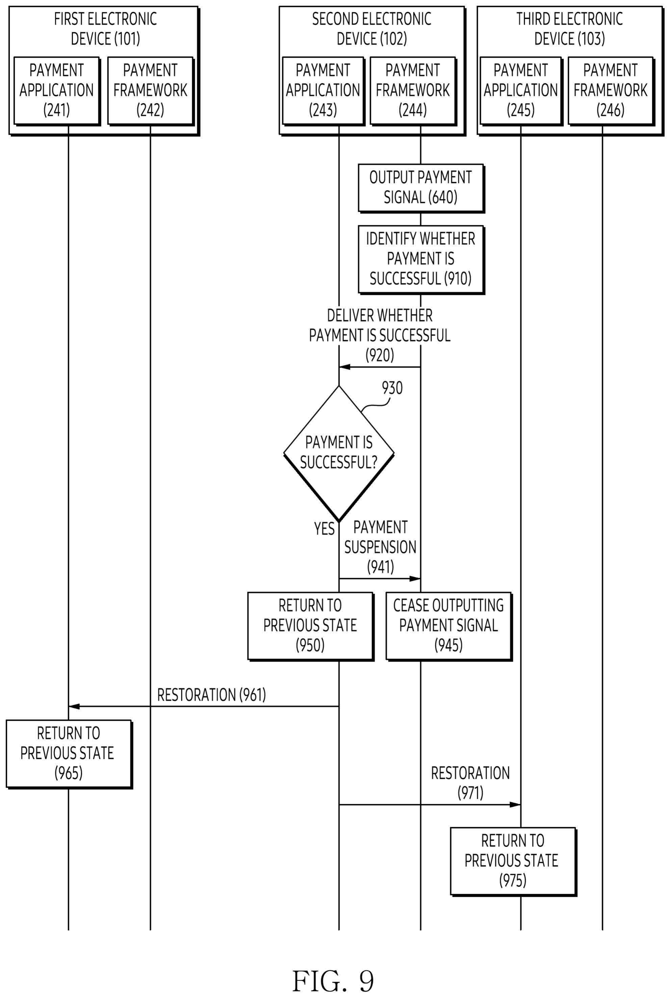

FIG. 9 is a flowchart illustrating an operation in which another electronic device triggers other electronic devices according to whether payment is successful according to an embodiment.

FIG. 9 may be described with reference to FIGS. 1, 2A, 2B, 3, 4, 5, 6, 7, and 8. Operation 640 of FIG. 9 may correspond to the operation 640 of FIGS. 6, 7, or 8.

Referring to FIG. 9, in the operation 640, a payment framework 244 of a second electronic device 102 may output a payment signal.

In operation 910, the payment framework 244 may identify whether payment is successful. A payment framework 242 may receive data indicating whether the payment is successful from at least one of a payment server 211, a financial server 213, a token server 215, a payment network 217, or a payment device 219. The payment framework 242 may identify whether the payment is successful based on the received data. For example, when the payment device 219 obtains a payment signal outputted via the operation 470 of FIG. 4, the payment signal obtained by the payment device 219 may be delivered to the payment network 217, the financial server 213, the payment server 211, or the token server 215. Based on the payment signal, the at least one of the payment server 211, the financial server 213, the token server 215, the payment network 217, or the payment device 219 may directly and/or indirectly transmit the data indicating whether the payment is successful to the payment framework 242. For example, when the payment signal is not received, the payment device 219 may directly transmit data indicating that the payment signal is not received to the payment framework 242. For example, when the at least one of the payment network 217, the financial server 213, the payment server 211, or the token server 215 does not succeed in payment based on the payment signal, the data indicating that the payment signal is not received may be transmitted indirectly to the payment framework 242 via the payment server 211.

In operation 920, the payment framework 244 may deliver whether the payment is successful. The payment framework 242 may deliver whether the payment is successful to a payment application 241. The payment framework 242 may deliver the data indicating whether the payment is successful to the payment application 241. The payment framework 242 may deliver a response including the data indicating whether the payment is successful to the payment application 241. Herein, the response may be RESULT_CODE_PAYMENT_SUCCESS, or RESULT_CODE_PAYMENT_FAILURE.

A payment application 243 receiving whether the payment is successful may be identified as operating in a post-payment mode. Herein, the post-payment mode may mean a situation after receiving whether the payment based on the payment signal is successful after outputting the payment signal.

In operation 930, the payment application 243 may determine whether the payment is successful. The payment application 241 may determine whether the payment is successful based on the data indicating whether the payment is successful. For example, the payment application 241 may determine whether the payment is successful based on a code included in the response. For example, when the response includes RESULT_CODE_PAYMENT_SUCCESS, the payment application 241 may determine that the payment is successful. For example, when the response includes RESULT_CODE_PAYMENT_FAILURE, the payment application 241 may determine that the payment has failed.

Based on determining that the payment is successful, the payment application 241 may perform operation 941. Based on determining that the payment is successful, the payment application 241 may perform operation 950. An execution order of the operation 941 and the operation 950 may be changed.

In the operation 941, the payment application 243 may command payment suspension. The payment application 241 may command the payment suspension to the payment framework 242. The payment application 241 may command the payment suspension to the payment framework 242 via a command (StopPay).

In operation 945, the payment application 243 may cease outputting a payment signal. The payment framework 242 may cease radiating a payment signal based on MST. The payment framework 242 may cease transmitting a payment signal based on NFC. The payment framework 242 may cease outputting a payment signal based on the MST and/or the NFC.

In operation 950, the payment application 243 may return to a previous state. For example, the payment application 241 may return to the previous state based on information on the previous state. For example, the payment application 241 may display a previously displayed screen on a display based on the information on the previous state. Herein, the information on the previous state may be obtained via the operation 441 of FIG. 4.

In operation 961, the payment application 243 may command restoration. The payment application 241 may command the restoration to the payment application 243. The payment application 241 may command the restoration to the payment application 243 via a command (Restore).

The payment application 241 receiving the restoration command may be identified as operating in a post-payment mode. Herein, the post-payment mode may mean a situation after receiving whether the payment based on the payment signal is successful after outputting the payment signal.

In operation 965, the payment application 241 may return to a previous state. For example, the payment application 243 may return to the previous state based on information on the previous state. For example, the payment application 243 may display a previously displayed screen on a display based on the information on the previous state. Herein, the information on the previous state may be obtained via the operation 443 of FIG. 4.

In operation 971, the payment application 243 may command restoration. The payment application 241 may command the restoration to a payment application 245. The payment application 241 may command the restoration to the payment application 245 via a command (Restore).

The payment application 245 receiving the restoration command may be identified as operating in a post-payment mode. Herein, the post-payment mode may mean a situation after receiving whether the payment based on the payment signal is successful after outputting the payment signal.

In operation 965, the payment application 245 of a third electronic device 103 may return to a previous state. For example, the payment application 245 may return to the previous state based on information on the previous state. For example, the payment application 245 may display a previously displayed screen on a display based on information on the previous state. Herein, the information on the previous state may be obtained via the operation 445 of FIG. 4.

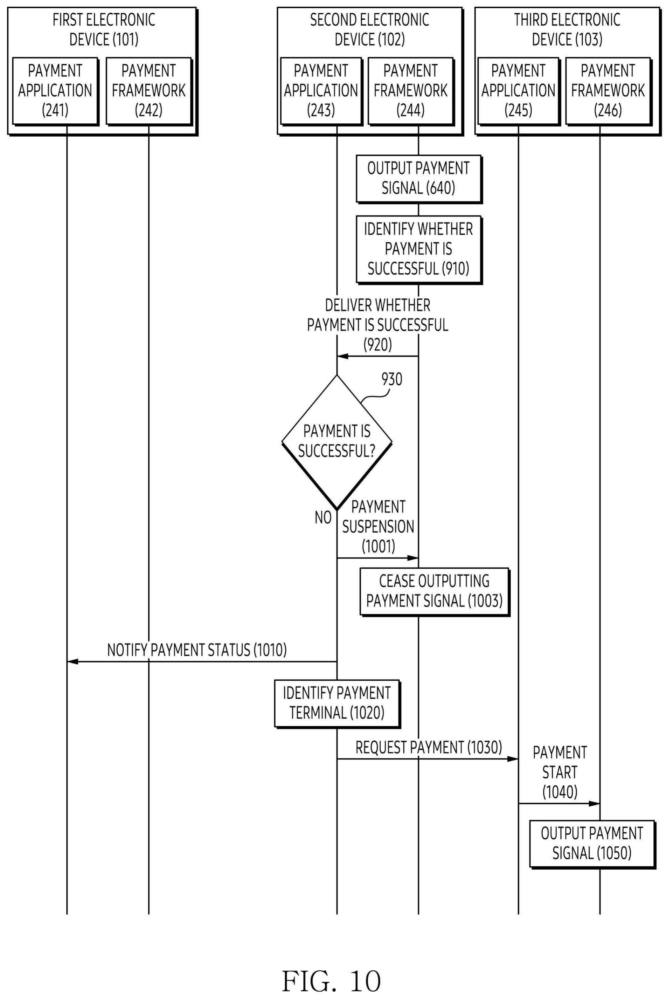

FIG. 10 is a flowchart illustrating an operation in which another electronic device triggers other electronic devices according to whether payment is successful according to an embodiment.

FIG. 10 may be described with reference to FIGS. 1, 2A, 2B, 3, 4, 5, 6, 7, 8 and 9. Operation 640 of FIG. 10 may correspond to the operation 640 of FIGS. 6, 7, 8, or 9. Operations 910, 920, 930, 941, or 945 of FIG. 10 may correspond to the operations 910, 920, 930, 941, or 945 of FIG. 9, respectively.

Referring to FIG. 10, in the operation 640, a payment framework 244 of a second electronic device 102 may output a payment signal.

In the operation 910, the payment framework 244 may identify whether payment is successful.

In the operation 920, the payment framework 244 may deliver whether the payment is successful.

In the operation 930, a payment application 243 may determine whether the payment is successful.

Based on determining that the payment has failed, a payment application 241 may perform operation 1001. Based on determining that the payment has failed, the payment application 241 may perform operation 1010. An execution order of the operation 1001 and the operation 1010 may be changed.

In the operation 1001, the payment application 243 may command payment suspension. The payment application 241 may command the payment suspension to a payment framework 242. The payment application 241 may command the payment suspension to the payment framework 242 via a command (StopPay).

In operation 1003, the payment application 243 may cease outputting a payment signal. The payment framework 244 may cease radiating a payment signal based on MST. The payment framework 244 may cease transmitting a payment signal based on NFC. The payment framework 244 may cease outputting a payment signal based on the MST and/or the NFC.

In the operation 1010, the payment application 243 may notify a payment status.

In operation 1020, the payment application 243 may identify a payment terminal. In an embodiment, the payment application 243 may identify the payment terminal based on a priority of electronic devices 101, 102, and 103 of a user. In an embodiment, the payment application 243 may identify the payment terminal based on a priority of an application running in each of the electronic devices 101, 102, and 103. In an embodiment, the payment application 243 may identify the payment terminal based on an error code. In an embodiment, the payment application 243 may identify the payment terminal based on a payment device 219.

In operation 1030, the payment application 243 may request payment. The payment application 243 may request the payment from a payment application 245. The payment application 243 may command the payment application 245 to request the payment via a command (TossPay). Herein, a parameter of the command (TossPay) may include at least one of an authentication result (secureObject), a payment configuration (payConfig), a callback method (callback), or an error code. Herein, the authentication result (secureObject) may be a value indicating whether user authentication is successful. The payment configuration (payConfig) may be a configuration value for determining a method of generating and/or outputting a signal based on the MST and/or the NFC. The callback method (callback) may designate a scheme (or an interface) for returning a result of performing payment. The error code (failErrorCode) may be a value for indicating a reason for failure of the payment. The error code may include an error code illustrated in Table 1 and an error code illustrated in Table 2. However, it is not limited thereto.

In operation 1040, the payment application 245 of the third electronic device 103 may command a payment start. The payment application 245 may command the payment start to a payment framework 246. The payment application 245 may transmit at least one of card information, a token ID, a token, a key, an authentication result, a payment configuration, or a callback method to the payment framework 246 via a command (e.g., StartPay). Herein, a parameter of the command (e.g., StartPay) may include at least one of the authentication result (secureObject), the payment configuration (payConfig), or a callback method (callback). Herein, the authentication result (secureObject) may be a value indicating whether user authentication is successful. The payment configuration (payConfig) may be a configuration value for determining a method of generating and/or outputting a signal based on the MST and/or the NFC. The callback method (callback) may designate a scheme (or an interface) for returning a result of performing payment. However, it is not limited thereto.

In operation 1050, the payment framework 246 may output a payment signal. The payment framework 246 may radiate a payment signal based on the MST. The payment framework 246 may transmit a payment signal based on the NFC. The payment framework 246 may output a payment signal based on the MST and/or the NFC. For example, the framework 246 may simultaneously output the payment signal based on the MST and the payment signal based on the NFC. For example, the framework 244 may sequentially output the payment signal based on the MST and the payment signal based on the NFC. For example, the framework 246 may output only one signal selected among the payment signal based on the MST or the payment signal based on the NFC.

The payment application 245 that outputs the payment signal may be identified as operating in a payment mode. Herein, the payment mode may mean a situation in which the payment signal is outputted. The payment mode may mean a situation in which the payment signal is outputted by the payment framework 246.

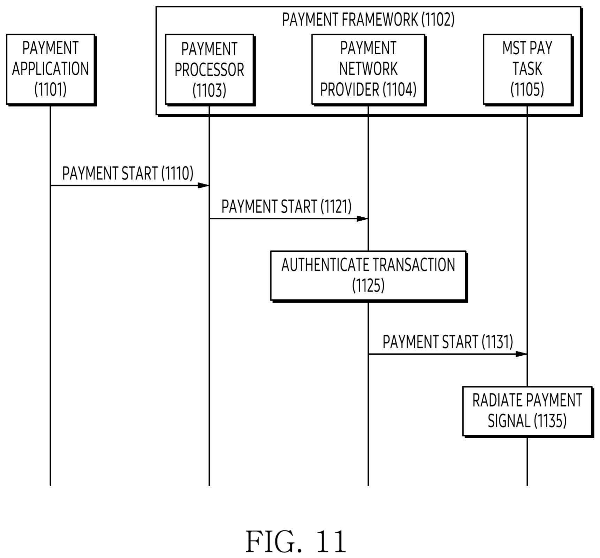

FIG. 11 is a flowchart illustrating an operation in which another payment framework radiates a payment signal according to an embodiment.

FIG. 11 may be described with reference to FIGS. 1, 2A, and 2B.

A payment processor 1103, a payment network provider 1104, and an MST Pay task 1105 of FIG. 11 may be software included in a payment framework 1102.

Referring to FIG. 11, in operation 1110, the payment application 1101 may command a payment start. The payment application 1101 may command the payment start to the payment framework 1102. The payment application 1101 may transmit at least one of card information, a token ID, a token, a key, an authentication result, a payment configuration, or a callback method to the payment framework 1102 via a command (e.g., StartPay). Herein, a parameter of the command (e.g., StartPay) may include at least one of the authentication result (secureObject), the payment configuration (payConfig), or the callback method (callback). Herein, the authentication result (secureObject) may be a value indicating whether user authentication is successful. The payment configuration (payConfig) may be a configuration value for determining a method of generating and/or outputting a signal based on MST and/or NFC. The callback method (callback) may designate a scheme (or an interface) for returning a result of performing payment. However, it is not limited thereto.

In operation 1121, the payment processor 1103 may command a payment start. The payment processor 1103 may command the payment start to the payment framework 1104. The payment processor 1103 may transmit at least one of card information, a token ID, a token, a key, an authentication result, a payment configuration, or a callback method to the payment framework 1104 via a command (e.g., StartPay). Herein, a parameter of the command (e.g., StartPay) may include at least one of the authentication result (secureObject), the payment configuration (payConfig), or the callback method (callback). Herein, the authentication result (secureObject) may be a value indicating whether user authentication is successful. The payment configuration (payConfig) may be a configuration value for determining a method of generating and/or outputting a signal based on MST and/or NFC. The callback method (callback) may designate a scheme (or an interface) for returning a result of performing payment. However, it is not limited thereto.

In operation 1125, the payment network provider 1104 may authenticate a transaction. The payment network provider 1104 may identify whether the authentication result (secureObject) is valid. The payment network provider 1104 may perform a transit operation 1131 in which the authentication result (secureObject) is valid.

In operation 1131, the payment network provider 1104 may command a payment start. Herein, a command for the payment start may be startMstPay. In the command (startMstPay), baudRate, and mstPayCfg may be inserted as parameters. The baud rate may mean the number of pulses per second or the number of symbols per second. An MST payment configuration may set an encoding method and/or an output method of an MST signal.

In operation 1135, the MST pay task 1105 may radiate a payment signal. The MST pay task 1105 may radiate the payment signal generated based on the baudRate and mstPayCfg.

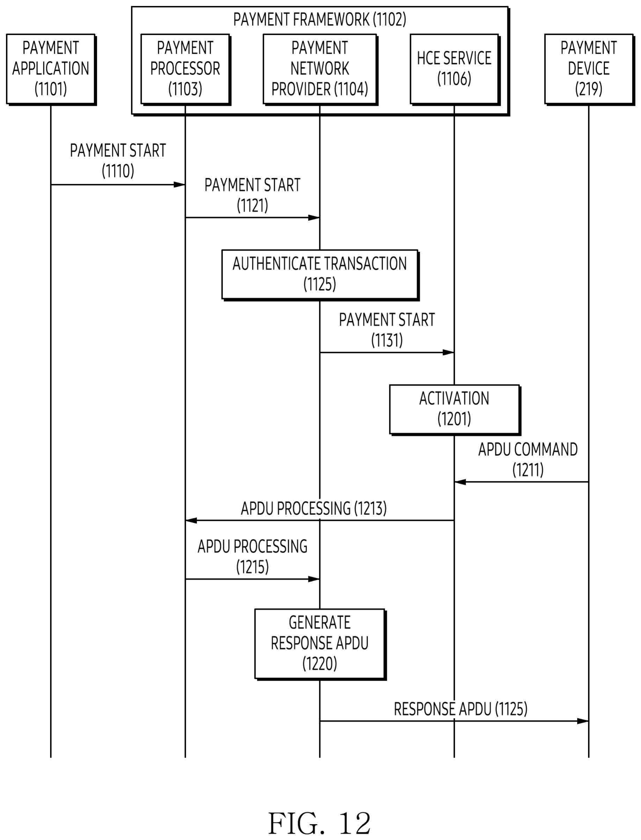

FIG. 12 is a flowchart illustrating an operation in which another payment framework transmits a payment signal according to an embodiment.

FIG. 12 may be described with reference to FIGS. 1, 2A, and 2B. Operations 1110, 1121, 1125, and 1131 of FIG. 12 may correspond to the operations 1110, 1121, 1125, and 1131, respectively.

A payment processor 1103, a payment network provider 1104, and a host card emulation (HCE) service 1106 of FIG. 12 may be software included in a payment framework 242.

Referring to FIG. 12, in the operation 1110, a payment application 1101 may command a payment start. In the operation 1121, the payment processor 1103 may command a payment start. In the operation 1125, the payment network provider 1104 may authenticate a transaction. In operation 1131, the payment network provider 1104 may command a payment start.

In operation 1201, the HCE service 1106 may be activated. For example, a payment framework 1102 may activate the HCE service 1106. Herein, the HCE service 1106 being activated may mean that an application protocol data unit (APDU) command may be received from an external NFC reader (e.g., a payment device 219).

In operation 1211, the payment device 219 may transmit the APDU command. The payment device 219 may transmit a command (processCommandApdu) to the HCE service 1106. Herein, the command (processCommandApdu) may include data requesting a response. For example, the command (processCommandApdu) may refer to data to be included in a response APDU.

In operation 1213, the HCE service 1106 may request APDU processing. The HCE service 1106 may transmit a command (processApdu) to the payment processor 1103.

In operation 1215, the payment processor 1103 may request APDU processing. The payment processor 1103 may transmit a command (processApdu) to the payment network provider 1104.

In FIG. 12, via the operations 1213 and 1215, it is illustrated that the request for APDU processing of the HCE service 1106 is transmitted to the payment network provider 1104 via the payment processor 1103. However, it is not limited thereto. For example, the HCE service 1106 may directly request APDU processing to the payment network provider 1104.

In operation 1220, the payment network provider 1104 may generate a response APDU. It may generate data requested by the command (processcommandApdu). For example, the payment network provider 1104 may generate the response APDU including at least a token.

In operation 1225, the payment network provider 1104 may transmit the response APDU. The payment network provider 1104 may output the response APDU based on NFC. The payment network provider 1104 may output the response APDU based on the NFC to the payment device 219.

In FIG. 12, via the operation 1225, it is illustrated that the payment network provider 1104 transmits the response APDU. However, it is not limited thereto. For example, the payment network provider 1104 may request the HCE service 1106 to transmit the response APDU. The HCE service 1106 may output the response APDU based on the NFC to the payment device 219.

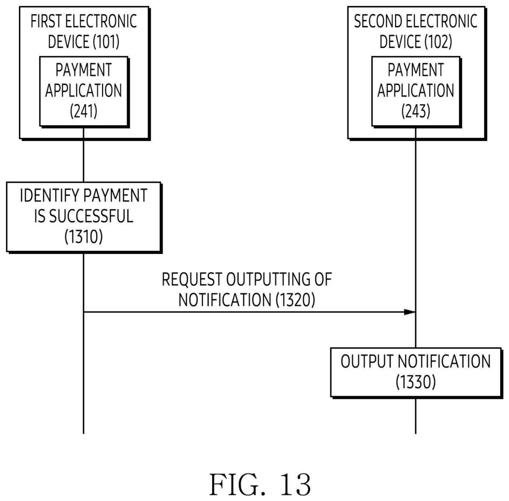

FIG. 13 is a flowchart illustrating an operation in which another electronic device requests other electronic devices to display a message according to whether payment is successful.

FIG. 13 may be described with reference to FIGS. 1, 2A, and 2B.

Referring to FIG. 13, in operation 1310, a payment application 241 of a first electronic device 101 may identify whether payment is successful. The payment application 241 may identify whether the payment is successful based on data indicating whether the payment is successful. For example, the payment application 241 may identify whether the payment is successful based on a code included in a response. For example, when the response includes RESULT_CODE_PAYMENT_SUCCESS, the payment application 241 may identify that the payment is successful. For example, when the response includes RESULT_CODE_PAYMENT_FAILURE, the payment application 241 may identify that the payment has failed.

In operation 1320, the payment application 241 may request outputting of a notification. The payment application 241 may request outputting of the notification corresponding to a response code. The payment application 241 may request outputting of the notification corresponding to the response code, to a payment application 243. However, it is not limited thereto. The payment application 241 may request outputting of the notification corresponding to the response code, to a payment application of at least one electronic device selected from among electronic devices 102 and 103 other than the first electronic device 101.

In operation 1330, the payment application 243 may output the notification. The payment application 243 may output a payment UI including the notification. Herein, the payment UI may include a UI in a shape capable of interacting with a user. For example, the payment UI may be based on at least one of GUI, NUI, AUI, or PUI. When the payment UI is based on the NUI, the payment application 243 may output a haptic based on a haptic module (not illustrated) based on receiving the notification corresponding to the response code. Herein, the payment application 241 may change a pattern of stimulation (e.g., mechanical stimulation or electrical stimulation) according to the response code. When the payment UI is based on the AUI, the payment application 243 may output a sound signal based on a sound output module (not illustrated) based on receiving the notification corresponding to the response code. Herein, the payment application 243 may change a sound outputted according to the response code.

For example, when the response includes RESULT_CODE_PAYMENT_SUCCESS, the payment application 243 may output a notification indicating a payment success. When the response includes RESULT_CODE_PAYMENT_SUCCESS, the payment application 243 may output a payment UI based on the notification indicating the payment success.

For example, when the response includes RESULT_CODE_PAYMENT_FAILURE, the payment application 243 may output a notification indicating a payment failure. For example, when the response includes RESULT_CODE_PAYMENT_FAILURE, the payment application 243 may output a notification including a reason for the payment failure. When the response includes RESULT_CODE_PAYMENT_FAILURE, the payment application 243 may output a payment UI based on the notification indicating the payment failure. When the response includes RESULT_CODE_PAYMENT_FAILURE, the payment application 243 may output a payment UI based on the notification including the reason for the payment failure.

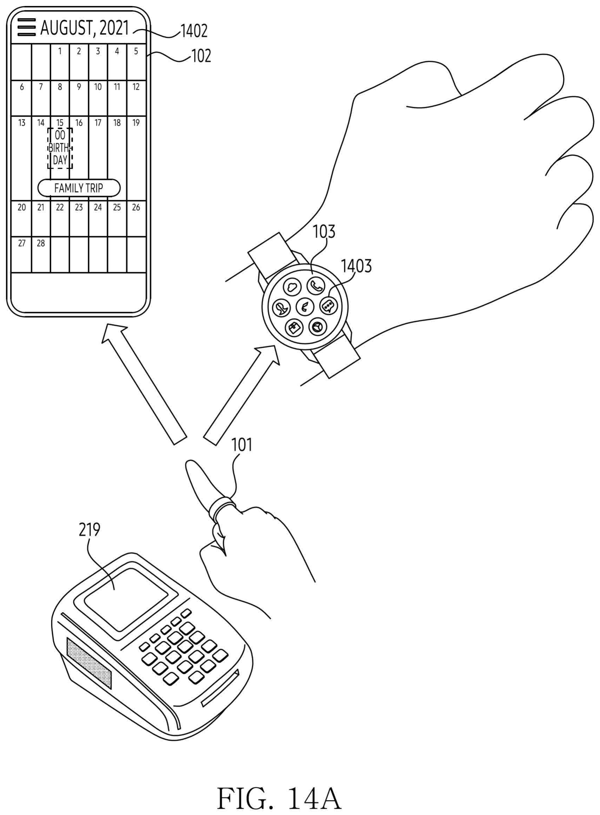

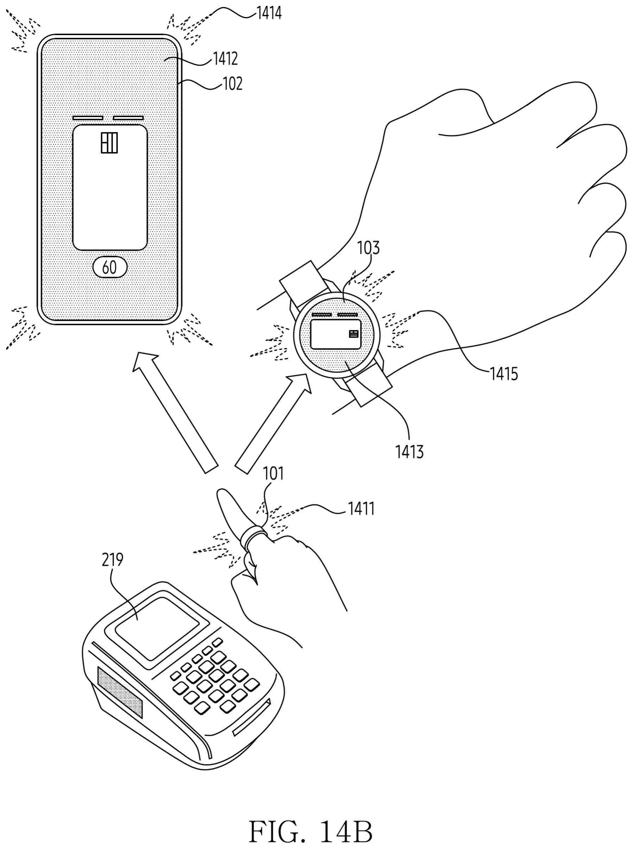

FIG. 14A illustrates an example of a screen displayed by electronic devices according to an embodiment. FIG. 14B illustrates an example of a screen displayed by electronic devices according to an embodiment.

FIG. 14A may illustrate a situation in which a payment application 241 is executed via a first electronic device 101. Referring to FIG. 14A, electronic devices 102 and 103 other than the first electronic device 101 may be executing an application different from a payment application 243 or 245. Referring to FIG. 14A, the electronic devices 102 and 103 may display a screen for the application different from the payment application 243 or 245 on a display 1402 or 1403.

In the situation of FIG. 14A, the first electronic device 101 may select a card via a user input. The first electronic device 101 may authenticate a user via the user input. The first electronic device 101 may transmit, to the electronic devices 102 and 103, a signal for the electronic devices 102 and 103 to execute the payment application 243 pr 245 based on the user being authenticated.

FIG. 14B may illustrate a situation in which the electronic devices 102 and 103 execute the payment application 243 or 245 by a trigger of the first electronic device 101. Referring to FIG. 14B, the electronic devices 102 and 103 may display a payment UI 1412 or 1413 via the payment application 243 or 245. The electronic devices 102 and 103 may display the payment UI 1412 or 1413 including the selected payment card and an image object with respect to a signature. However, it is not limited thereto. The electronic devices 101, 102, and 103 may output a payment UI (e.g., NUI) 1411, 1414, or 1415 based on vibration. The electronic devices 101, 102, and 103 may output the payment UI 1411, 1414, or 1415 including the vibration corresponding to the selected payment card.

In the situation of FIG. 14B, at least one of the electronic devices 101, 102, and 103 may output a payment signal. For example, some of the electronic devices 101, 102, and 103 that output a payment UI may not output the payment signal. For example, among the electronic devices 101, 102, and 103 that output the payment UI, the first electronic device 101 may output a payment signal, and the electronic devices 102 and 103 may not output a payment signal. However, it is not limited thereto.

In the situation of FIG. 14B, payment may be successful by an arbitrary electronic device among the electronic devices 101, 102, and 103. The first electronic device 101 may transmit, to the electronic devices 102 and 103, a signal for the electronic devices 102 and 103 to return to a previous state based on the payment being successful.

The electronic devices 102 and 103 may display a screen before executing the payment application 243 or 245 on the display 1402 or 1403 again.

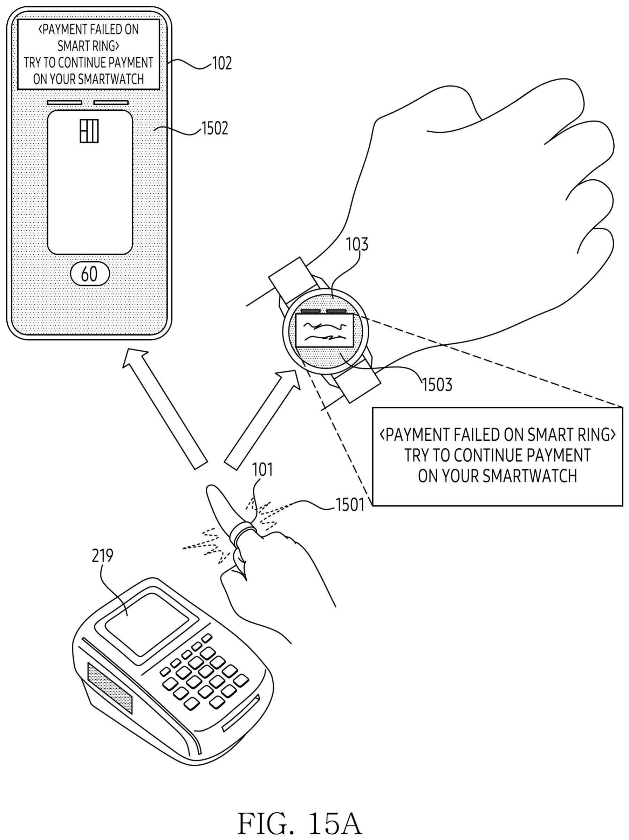

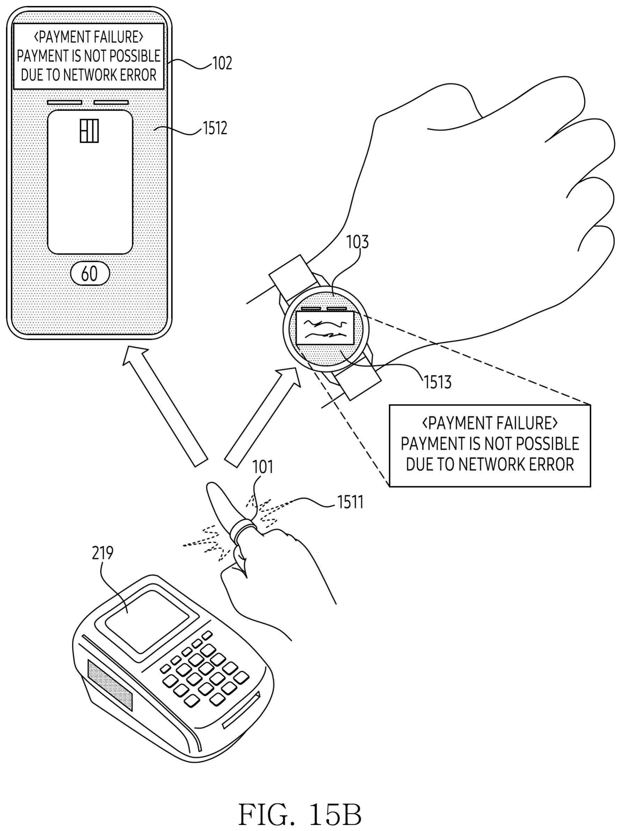

FIG. 15A illustrates an example of a message displayed by electronic devices according to an embodiment. FIG. 15B illustrates an example of a message displayed by electronic devices according to an embodiment.

A first electronic device 101 may identify whether payment is successful. The first electronic device 101 may identify whether the payment is successful based on a code included in a response. When the response includes RESULT_CODE_PAYMENT_SUCCESS, the first electronic device 101 may identify that the payment is successful. When the response includes RESULT_CODE_PAYMENT_FAILURE, the first electronic device 101 may identify that the payment has failed.

The first electronic device 101 may output a notification corresponding to a response code. When the payment has failed, the first electronic device 101 may output the notification corresponding to the response code. In addition, the first electronic device 101 may request outputting of the notification corresponding to the response code, to at least one of other electronic devices 102 and 103.

For example, when it is possible to retry the payment, the first electronic device 101 may output a notification guiding the payment retry to the electronic devices 101, 102, and 103. Referring to FIG. 15A, the electronic devices 101, 102, and 103 may output a payment UI 1501, 1502, or 1503 including the notification for guiding the payment retry. Herein, the payment UI 1501 may include a haptic. The payment UI 1502 or 1503 may be displayed via a display.

For example, when it is not possible to retry the payment, the first electronic device 101 may output a notification guiding that payment is not possible to the electronic devices 101, 102, and 103. Referring to FIG. 15B, the electronic devices 101, 102, and 103 may output a payment UI 1511, 1512, or 1513 including a notification guiding that payment is not possible. Herein, the payment UI 1511 may include a haptic. The payment UI 1512 or 1513 may be displayed through the display.

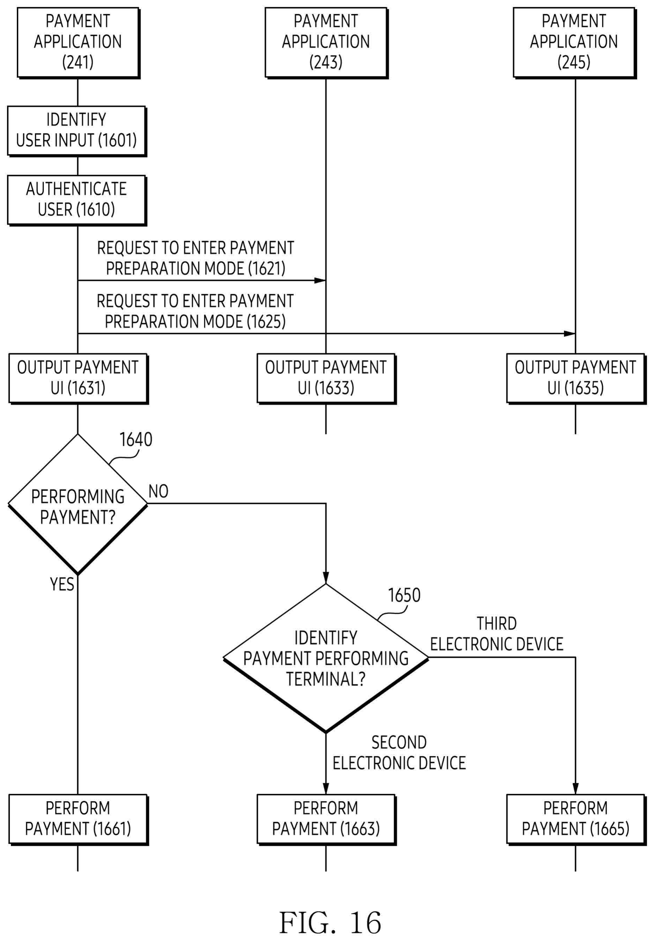

FIG. 16 is a flowchart illustrating an operation in which an electronic device triggers an entry into a payment mode according to an embodiment.

FIG. 16 may be described with reference to FIGS. 1, 2A, 2B, and 3.

Referring to FIG. 16, in operation 1601, a payment application 241 may identify a user input. Herein, the user input may be an input used to authenticate a user. For example, the user input may include a gesture input. The gesture input may include a pattern input for authenticating the user. The user input may include a password for authenticating the user or an input for inputting a personal identification number (PIN). The user input may include an input of biometric information (e.g., an iris, or a fingerprint) of the user.

The payment application 241 may identify a card corresponding to the user input. The payment application 241 may identify the card corresponding to the user input among a plurality of cards. The payment application 241 may identify the card indicated by the user input among the plurality of cards registered in association with the user account. Herein, the plurality of cards being registered in association with the user account, it may mean that they are registered in a payment server 211. The plurality of cards being registered in association with the user account, the payment server 211 may manage the plurality of cards in association with the user account.

In operation 1610, the payment application 241 may authenticate the user. The payment application 241 may authenticate the user based on the user input. For example, the payment application 241 may authenticate the user based on whether the user input is a registered user input. For example, the payment application 241 may authenticate the user based on whether the user input is a registered gesture. Herein, the user input being registered may mean that data indicating the user input is registered in memory of the first electronic device 101. The user input being registered may mean that data indicating the user input is registered in a server (not illustrated) that manages the authentication of the user. For example, the user may be authenticated by comparison between the user input and the registered data. However, it is not limited thereto. The payment application 241 may authenticate the user based on the biometric information (e.g., the iris or the fingerprint) of the user. For example, the payment application 241 may authenticate the user based on whether the biometric information is registered biometric information. Herein, the biometric information being registered may mean that data on the biometric information is registered in the memory of the first electronic device 101. The biometric information being registered may mean that data on the biometric information is registered in a server (not illustrated) that manages the authentication of the user. For example, the user may be authenticated by comparison between the biometric information and the registered data.

In operation 1621, the payment application 241 may request to enter a payment preparation mode. The payment application 241 may request a payment application 243 to enter the payment preparation mode. Herein, the payment preparation mode may include a state in which the payment application 243 is running in a foreground. The payment preparation mode may include a state in which the running foreground application is changed to the payment application 243. The payment preparation mode may include a state in which the payment application 243 selects a card. The payment preparation mode may include a state in which the payment application 243 outputs a payment UI. Herein, entering the payment preparation mode may mean switching the running foreground application by the second electronic device 102. Entering the payment preparation mode may mean that the second electronic device 102 switches the running foreground application into the payment application 243.

In operation 1625, the payment application 241 may request to enter a payment preparation mode. The payment application 241 may request the payment application 245 to enter the payment preparation mode. Herein, the payment preparation mode may include a state in which the payment application 245 is running in the foreground. The payment preparation mode may include a state in which the running foreground application is changed to the payment application 245. The payment preparation mode may include a state in which the payment application 245 selects a card. The payment preparation mode may include a state in which the payment application 245 outputs a payment UI.

In operation 1631, the payment application 241 may output a payment UI. The payment application 241 may output the payment UI via a display 260. Herein, the payment UI may include a UI in a shape capable of interacting with the user. For example, the payment UI may be based on at least one of GUI, NUI, AUI, or PUI. When the payment UI is based on the NUI, the payment application 241 may output a haptic based on a haptic module 179 based on receiving a card selection response. When the payment UI is based on the AUI, the payment application 241 may output a sound signal based on a sound output module 155 based on receiving the card selection response. Herein, in the payment application 241, a sound outputted may be changed according to the selected card.

In operation 1633, the payment application 243 may output a payment UI. The payment application 243 may output the payment UI via a display 261. Herein, the payment UI may include a UI in a shape capable of interacting with the user. For example, the payment UI may be based on at least one of GUI, NUI, AUI, or PUI.

In operation 1635, the payment application 245 may output a payment UI. The payment application 245 may output the payment UI via a display 263. Herein, the payment UI may include a UI in a shape capable of interacting with the user. For example, the payment UI may be based on at least one of GUI, NUI, AUI, or PUI.

In operation 1640, the payment application 241 may determine whether to perform payment. The payment application 241 may identify a payment terminal. In an embodiment, the payment application 241 may identify the payment terminal based on a priority of electronic devices 101, 102, and 103 of the user. In an embodiment, the payment application 241 may identify the payment terminal based on a priority of an application running in each of the electronic devices 101, 102, and 103. In an embodiment, the payment application 241 may identify the payment terminal based on a payment device 219.

When the first electronic device 101 is identified as the payment terminal, the payment application 241 may determine that the payment is performed. When the electronic devices 102 and 103 other than the first electronic device 101 are identified as the payment terminals, the payment application 241 may determine that payment is not performed.

In operation 1640, based on identifying that the first electronic device 101 performs the payment, the payment application 241 may perform operation 1661. In operation 1640, based on identifying that the first electronic device 101 does not perform the payment, the payment application 241 may perform operation 1650.

In the operation 1650, the payment application 241 may identify a payment performing terminal. In an embodiment, the payment application 241 may identify the payment terminal based on a priority of the electronic devices 102 and 103 of the user. In an embodiment, the payment application 241 may identify the payment terminal based on a priority of an application running in each of the electronic devices 102 and 103. In an embodiment, the payment application 241 may identify the payment terminal based on an error code. In an embodiment, the payment application 241 may identify the payment terminal based on the payment device 219.

When the second electronic device 102 is identified as the payment terminal, the payment application 241 may determine that the second electronic device 102 performs the payment. When the third electronic device 103 is identified as the payment terminal, the payment application 241 may determine that the third electronic device 103 performs the payment.

In the operation 1650, based on identifying that the second electronic device 102 is performing the payment, the payment application 243 may perform operation 1663. In operation the 1650, based on identifying that the third electronic device 103 is performing the payment, the payment application 245 may perform operation 1665.

According to an embodiment, the operation 1640 and the operation 1650 may be replaced with one operation. For example, in an embodiment, the payment application 241 may identify a payment terminal based on a priority of the electronic devices 101, 102, and 103 of the user. In an embodiment, the payment application 241 may identify the payment terminal based on a priority of an application running in each of the electronic devices 101, 102, and 103. In an embodiment, the payment application 241 may identify the payment terminal based on an error code. In an embodiment, the payment application 241 may identify the payment terminal based on the payment device 219.

Based on an electronic device identified as performing the payment, at least one of the operation 1661, the operation 1663, and the operation 1665 may be performed. For example, the operation 1661, the operation 1663, and the operation 1665 may be performed simultaneously and/or sequentially. For example, one of the operation 1661, the operation 1663, or the operation 1665 may be performed. For example, two selected operations of the operation 1661, the operation 1663, or the operation 1665 may be performed.

In the operation 1661, the payment application 241 may perform payment. The payment application 241 may output a payment signal via a payment framework 242. The payment application 241 may output the payment signal based on MST and/or NFC via the payment framework 242.

In operation 1663, the payment application 243 may perform payment. The payment application 243 may output a payment signal via a payment framework 244. The payment application 243 may output the payment signal based on the MST and/or the NFC via the payment framework 244.

In the operation 1665, the payment application 245 may perform payment. The payment application 245 may output a payment signal via a payment framework 246. The payment application 245 may output the payment signal based on the MST and/or the NFC via the payment framework 246.

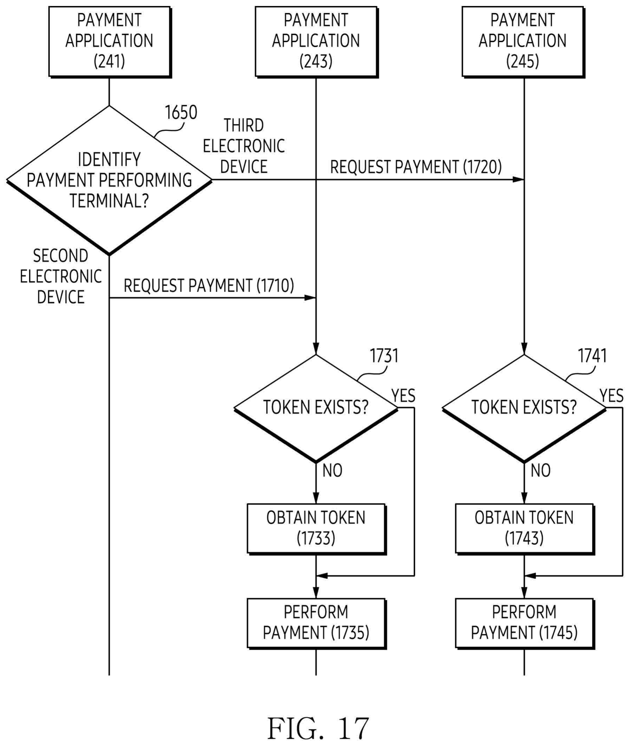

FIG. 17 is a flowchart illustrating an operation in which an electronic device triggers payment of another electronic device according to an embodiment.

FIG. 17 may be described with reference to FIGS. 1, 2A, 2B, 3 and 16. Operation 1650 of FIG. 17 may correspond to the operation 1650 of FIG. 16.

Referring to FIG. 17, in the operation 1650, a payment application 241 may identify a payment performing terminal.

When a second electronic device 102 is identified as a payment terminal, the payment application 241 may determine that the second electronic device 102 performs payment. When a third electronic device 103 is identified as the payment terminal, the payment application 241 may determine that the third electronic device 103 performs the payment.

In the operation 1650, based on identifying that a first terminal is performing the payment, the payment application 241 may perform operation 1710. In the operation 1650, based on identifying that a terminal other than the first terminal is performing the payment, the payment application 241 may perform operation 1720.

In operation 1721, the payment application 241 may request payment from a payment application 243. The payment application 241 may request the payment form the payment application 243. The payment application 241 may command the payment application 243 to request the payment via a command (TossPay). Herein, a parameter of the command (TossPay) may include at least one of an authentication result (secureObject), a payment configuration (payConfig), a callback method (callback), or an error code.

In operation 1720, the payment application 241 may request payment from a payment application 245. The payment application 241 may request the payment from the payment application 245. The payment application 241 may command the payment application 245 to request the payment via a command (TossPay). Herein, a parameter of the command (TossPay) may include at least one of an authentication result (secureObject), a payment configuration (payConfig), a callback method (callback), or an error code.

In operation 1731, the payment application 243 may determine whether a token exists. For example, the payment application 243 may determine whether a token for a selected card exists. For example, the payment application 243 may determine whether the token for the selected card is valid.

When the token for the card selected in the operation 1731 does not exist, the payment application 243 may perform operation 1733. When the token for the card selected in the operation 1731 exists but is not valid, the payment application 243 may perform the operation 1733. When the token for the card selected in the operation 1731 does not exist, the payment application 243 may perform the operation 1733. When the token for the card selected in the operation 1731 exists and is valid, the payment application 243 may perform operation 1735.

In the operation 1733, the payment application 243 may obtain a token. The payment application 243 may obtain a token from a payment server 211. The payment application 243 may obtain a token by requesting the payment server 211 for the token corresponding to information (e.g., PAN, a card expiration date, or CVV) on a payment means (e.g., a credit card). Herein, the information (e.g., the PAN, the card expiration date, or the CVV) on the payment means (e.g., the credit card) may be obtained from the payment application 243. For example, the information (e.g., the PAN, the card expiration date, or the CVV) on the payment means (e.g., the credit card) may be obtained by the request to enter the payment preparation mode in the operation 1621. For example, the information (e.g., the PAN, the card expiration date, or the CVV) on the payment means (e.g., the credit card) may be included in the payment request in the operation 1710.

In the operation 1735, the payment application 243 may perform payment. The payment application 243 may output a payment signal via a payment framework 244. The payment application 243 may output a payment signal based on MST and/or NFC via the payment framework 244.

In operation 1741, the payment application 245 may determine whether a token exists. For example, the payment application 245 may determine whether a token for the selected card exists. For example, the payment application 245 may determine whether the token for the selected card is valid.

When the token for the card selected in the operation 1741 does not exist, the payment application 245 may perform operation 1743. When the token for the card selected in the operation 1741 exists but is not valid, the payment application 245 may perform the operation 1743. When the token for the card selected in the operation 1741 does not exist, the payment application 245 may perform the operation 1743. When the token for the card selected in the operation 1741 exists and is valid, the payment application 245 may perform operation 1745.

In operation 1743, the payment application 245 may obtain a token. The payment application 245 may obtain a token from the payment server 211. The payment application 245 may obtain a token by requesting the payment server 211 for the token corresponding to information (e.g., PAN, a card expiration date, or CVV) on a payment means (e.g., a credit card). Herein, the information (e.g., the PAN, the card expiration date, or the CVV) on the payment means (e.g., the credit card) may be obtained from the payment application 245. For example, the information (e.g., the PAN, the card expiration date, or the CVV) on the payment means (e.g., the credit card) may be obtained by the request to enter the payment preparation mode in the operation 1625. For example, the information (e.g., the PAN, the card expiration date, or the CVV) on the payment means (e.g., the credit card) may be included in the payment request in the operation 1720.

In the operation 1745, the payment application 245 may perform payment. The payment application 245 may output a payment signal via a payment framework 246. The payment application 245 may output a payment signal based on the MST and/or the NFC via the payment framework 246.

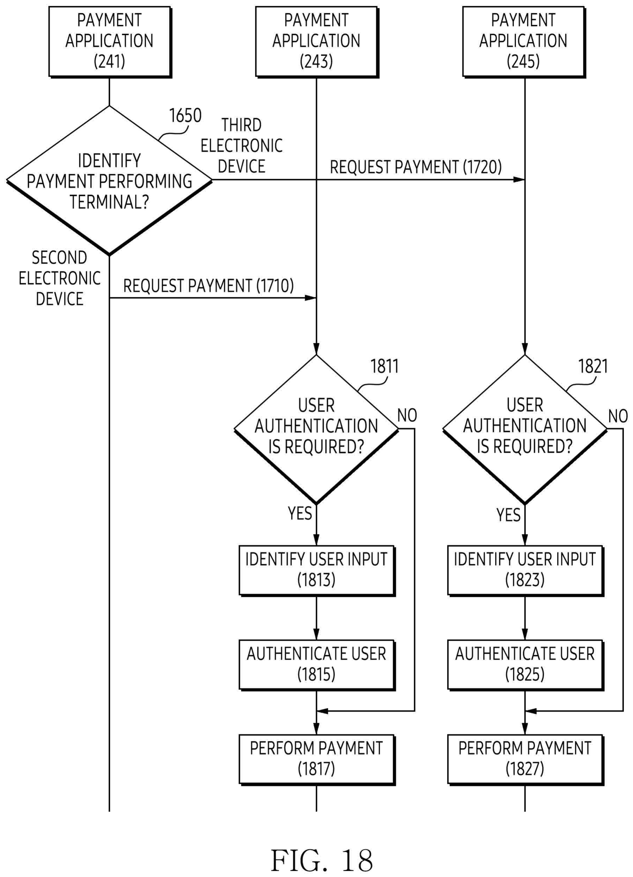

FIG. 18 is a flowchart illustrating an operation in which an electronic device triggers payment of another electronic device according to an embodiment.

FIG. 18 may be described with reference to FIGS. 1, 2A, 2B, 3 and 16. Operations 1650, 1710, or 1720 of FIG. 18 may correspond to the operations 1650, 1710, or 1720, respectively. Operation 1650 of FIG. 18 may correspond to the operation 1650 of FIGS. 16 or 17.

Referring to FIG. 18, in the operation 1650, a payment application 241 may identify a payment performing terminal. In the operation 1710, the payment application 241 may request payment from a payment application 243. In the operation 1720, the payment application 241 may request payment from a payment application 245.

In operation 1811, the payment application 243 may determine whether user authentication is required. The payment application 243 may determine whether the user authentication associated with the payment has been performed. The payment application 243 may determine whether an authentication result associated with the payment is identified.

For example, when the authentication result associated with the payment is not delivered from the payment application 241, the payment application 243 may determine that the user authentication is required. For example, when the authentication result associated with the payment delivered from the payment application 241 is not valid (e.g., expiration of the authentication), the payment application 243 may determine that user authentication is required. When the authentication result associated with the payment delivered from the payment application 241 is valid, the application 243 may determine that user authentication is not required.

When the user authentication is required in the operation 1811, the payment application 243 may perform operation 1813. When the user authentication is not required in the operation 1811, the payment application 243 may perform operation 1817.

In the operation 1813, the payment application 243 may identify a user input. The user input may be an input used to authenticate a user. For example, the user input may include a gesture input. The gesture input may include a pattern input for authenticating the user. The user input may include an input for inputting a password or PIN for authenticating the user. The user input may include an input of biometric information (e.g., an iris, or a fingerprint) of the user.

In operation 1815, the payment application 243 may authenticate the user. The payment application 243 may authenticate the user based on the user input. For example, the payment application 243 may authenticate the user based on whether the user input is a registered user input. For example, the payment application 243 may authenticate the user based on whether the user input is a registered gesture. Herein, the user input being registered may mean that data indicating the user input is registered in memory of a second electronic device 102. The user input being registered may mean that data indicating the user input is registered in a server (not illustrated) that manages the authentication of the user. For example, the user may be authenticated by comparison between the user input and the registered data. However, it is not limited thereto. The payment application 243 may authenticate the user based on the biometric information (e.g., the iris, or the fingerprint) of the user. For example, the payment application 243 may authenticate the user based on whether the biometric information is registered biometric information. Herein, the biometric information being registered may mean that data on the biometric information is registered in the memory of the second electronic device 102. The biometric information being registered may mean that data on the biometric information is registered in the server (not illustrated) that manages the authentication of the user. For example, the user may be authenticated by comparison between the biometric information and the registered data.

In operation 1817, the payment application 243 may perform payment. The payment application 243 may output a payment signal via a payment framework 244. The payment application 243 may output a payment signal based on MST and/or NFC via the payment framework 244.

In operation 1821, the payment application 245 may determine whether user authentication is required. The payment application 245 may determine whether the user authentication associated with the payment has been performed. The payment application 245 may determine whether an authentication result associated with the payment is identified.

For example, when the authentication result associated with the payment is not delivered from the payment application 241, the payment application 245 may determine that the user authentication is required. For example, when the authentication result associated with the payment delivered from the payment application 241 is not valid (e.g., expiration of the authentication), the payment application 245 may determine that the user authentication is required. When the authentication result associated with the payment delivered from the payment application 241 is valid, the application 245 may determine that user authentication is not required.

When the user authentication is required in the operation 1821, the payment application 245 may perform operation 1823. When the user authentication is not required in the operation 1821, the payment application 245 may perform operation 1827.

In the operation 1823, the payment application 245 may identify a user input. The user input may be an input used to authenticate the user. For example, the user input may include a gesture input. The gesture input may include a pattern input for authenticating the user. The user input may include an input for inputting a password or PIN for authenticating the user. The user input may include an input of biometric information (e.g., an iris, or a fingerprint) of the user.

In the operation 1825, the payment application 245 may authenticate the user. The payment application 245 may authenticate the user based on the user input. For example, the payment application 245 may authenticate the user based on whether the user input is a registered user input. For example, the payment application 245 may authenticate the user based on whether the user input is a registered gesture. Herein, the user input being registered may mean that data indicating the user input is registered in memory of a third electronic device 103. The user input being registered may mean that data indicating the user input is registered in a server (not illustrated) that manages the authentication of the user. For example, the user may be authenticated by comparison between the user input and the registered data. However, it is not limited thereto. The payment application 245 may authenticate the user based on the biometric information (e.g., the iris, or the fingerprint) of the user. For example, the payment application 245 may authenticate the user based on whether the biometric information is registered biometric information. Herein, the biometric information being registered may mean that data on the biometric information is registered in the memory of the third electronic device 103. The biometric information being registered may mean that data on the biometric information is registered in the server (not illustrated) that manages the authentication of the user. For example, the user may be authenticated by comparison between the biometric information and the registered data.

In the operation 1827, the payment application 245 may perform payment. The payment application 245 may output a payment signal via a payment framework 246. The payment application 245 may output a payment signal based on the MST and/or the NFC via the payment framework 246.

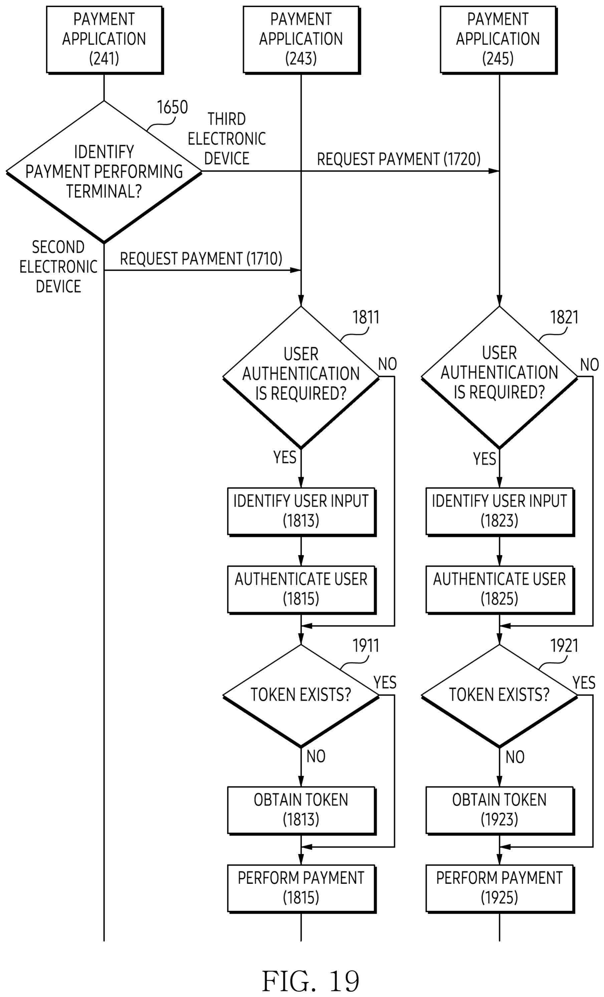

FIG. 19 is a flowchart illustrating an operation in which an electronic device triggers payment of another electronic device according to an embodiment.

FIG. 19 may be described with reference to FIGS. 1, 2A, 2B, 3 and 16. Operations 1650, 1710, or 1720 of FIG. 19 may correspond to the operations 1650, 1710, or 1720 of FIG. 17 or 18, respectively. Operations 1811, 1813, 1815, 1821, 1823, or 1825 of FIG. 19 may correspond to the operations 1811, 1813, 1815, 1821, 1823, or 1825. The operation 1650 of FIG. 18 may correspond to the operation 1650, of FIGS 16, 17, or 18.

Referring to FIG. 19, in the operation 1650, a payment application 241 may identify a payment performing terminal. In the operation 1710, the payment application 241 may request payment from a payment application 243. In the operation 1720, the payment application 241 may request payment from a payment application 245.

In the operation 1811, the payment application 243 may determine whether user authentication is required. When the user authentication is required in the operation 1811, the payment application 243 may perform the operation 1813. When the user authentication is not required in the operation 1811, the payment application 243 may perform operation 1911.

In the operation 1813, the payment application 243 may identify a user input. In the operation 1815, the payment application 243 may authenticate a user.

In the operation 1911, the payment application 243 may determine whether a token exists. For example, the payment application 243 may determine whether a token for a selected card exists. For example, the payment application 243 may determine whether the token for the selected card is valid.

When the token for the card selected in the operation 1911 does not exist, the payment application 243 may perform operation 1913. When the token for the card selected in the operation 1911 exists but is not valid, the payment application 243 may perform the operation 1913. When the token for the card selected in the operation 1911 does not exist, the payment application 243 may perform the operation 1913. When the token for the card selected in the operation 1911 exists and is valid, the payment application 243 may perform operation 1915.

In the operation 1913, the payment application 243 may obtain a token. The payment application 243 may obtain the token from a payment server 211. The payment application 243 may obtain a token by requesting the payment server 211 for the token corresponding to information (e.g., PAN, a card expiration date, or CVV) on a payment means (e.g., a credit card).

In the operation 1915, the payment application 243 may perform payment. The payment application 243 may output a payment signal via a payment framework 244. The payment application 243 may output a payment signal based on MST and/or NFC via the payment framework 244.

In the operation 1821, the payment application 245 may determine whether user authentication is required. When the user authentication is required in the operation 1821, the payment application 245 may perform the operation 1823. When the user authentication is not required in the operation 1821, the payment application 245 may perform operation 1827.

In the operation 1823, the payment application 245 may identify a user input. In the operation 1825, the payment application 245 may authenticate the user.

In operation 1921, the payment application 245 may determine whether a token exists. For example, the payment application 245 may determine whether a token for a selected card exists. For example, the payment application 245 may determine whether the token for the selected card is valid.

When the token for the card selected in the operation 1921 does not exist, the payment application 245 may perform operation 1923. When the token for the card selected in the operation 1921 exists but is not valid, the payment application 245 may perform the operation 1923. When the token for the card selected in the operation 1921 does not exist, the payment application 245 may perform the operation 1923. When the token for the card selected in the operation 1921 exists and is valid, the payment application 245 may perform operation 1925.

In the operation 1923, the payment application 245 may obtain a token. The payment application 245 may obtain a token from the payment server 211. The payment application 245 may obtain a token by requesting the payment server 211 for information (e.g., PAN, card an expiration date, or CVV) on a payment means (e.g., a credit card).

In the operation 1925, the payment application 245 may perform the payment.

The payment application 245 may output a payment signal via a payment framework 246. The payment application 245 may output a payment signal based on the MST and/or the NFC via the payment framework 246.

As described above, a first electronic device 101 may comprise at least one communication circuitry 290. The first electronic device 101 may comprise at least one processor 120. The first electronic device 101 may comprise at least one memory 130 storing instructions. The instructions may be configured, when executed by the at least one processor 120, to cause the first electronic device 101 to, in response to an input requesting payment, obtain payment information related to a payment request. The instructions may be configured, when executed by the at least one processor 120, to cause the first electronic device 101 to, in response to obtaining the payment information, transmit, via the at least one communication circuitry 290, to at least one external electronic device 102 or 103 different from the first electronic device 101, data including the payment information to cause the at least one external electronic device 102 or 103 to display a screen including at least one piece of payment information on a display 261 or 263 of the at least one external electronic device 102 or 103. The instructions may be configured, when executed by the at least one processor 120, to cause the first electronic device 101 to radiate a payment signal for the payment based on the data including the payment information to the outside via the at least one communication circuitry 290 in response to obtaining the payment information.

The instructions may be configured, when executed by the at least one processor 120, to cause the first electronic device 101 to, after radiating the signal for the payment to the outside, obtain, via the at least one communication circuitry 290, a signal indicating that the payment has failed from a server 211, 213, 215, or 217 associated with the payment information, and in response to obtaining the signal indicating that the payment has failed, transmit, to the at least one external electronic device 102 or 103, a request to cause the at least one external electronic device 102 or 103 to radiate another payment signal for the payment based on the data to the outside.

The instructions may be configured, when executed by the at least one processor 120, to cause the first electronic device 101 to, in response to obtaining the signal indicating that the payment has failed, select some external electronic device 102 or 103 among the at least one external electronic device 102 or 103 based on priority information. The instructions may be configured, when executed by the at least one processor 120, to cause the first electronic device 101 to transmit, via the at least one communication circuitry 290, the request to the selected some external electronic device 102 or 103.

The instructions may be configured, when executed by the at least one processor 120, to cause the first electronic device 101 to obtain, via the at least one communication circuitry 290, another signal indicating that the payment has failed from the selected some external electronic device 102 or 103. The instructions may be configured, when executed by the at least one processor 120, to cause the first electronic device 101 to, in response to obtaining the other signal indicating that the payment has failed from the selected some external electronic device 102 or 103, based on priority information, select other some external electronic device 102 or 103 among the at least one external electronic device 102 or 103. The instructions may be configured, when executed by the at least one processor 120, to cause the first electronic device 101 to transmit, via the at least one communication circuitry 290, the request to the selected other some external electronic device 102 or 103.

The instructions may be configured, when executed by the at least one processor 120, to cause the first electronic device 101 to obtain another signal indicating that the payment is successful from the selected some external electronic device 102 or 103. The instructions may be configured, when executed by the at least one processor 120, to cause the first electronic device 101 to, in response to obtaining the other signal indicating that the payment is successful, transmit, via the at least one communication circuitry 290, to the at least one external electronic device 102 or 103, a request to cause the at least one external electronic device 102 or 103 to cease displaying the screen.

The instructions may be configured, when executed by the at least one processor 120, to cause the first electronic device 101 to, based on payment failure type information of the signal indicating that the payment has failed, transmit, via the at least one communication circuitry 290, the request based on the signal indicating that the payment has failed to the at least one external electronic device 102 or 103 such that the other signal is generated in the at least one external electronic device 102 or 103.

The instructions may be configured, when executed by the at least one processor 120, to cause the first electronic device 101 to radiate, via the at least one communication circuitry 290, the signal for the payment based on a first communication protocol to the outside. The instructions may be configured, when executed by the at least one processor 120, to cause the first electronic device 101 to, in response to obtaining the signal indicating that the payment has failed, select some external electronic device 102 or 103 among the at least one external electronic device 102 or 103 capable of generating the other signal for the payment based on a second communication protocol different from the first communication protocol. The instructions may be configured, when executed by the at least one processor 120, to cause the first electronic device 101 to transmit, via the at least one communication circuitry 290, the request to the selected some external electronic device 102 or 103.

The instructions may be configured, when executed by the at least one processor 120, to cause the first electronic device 101 to, after radiating the signal for the payment to the outside, obtain, via the at least one communication circuitry 290, a signal indicating that the payment has failed from a server 211, 213, 215, or 217 associated with the payment information. The instructions may be configured, when executed by the at least one processor 120, to cause the first electronic device 101 to, in response to obtaining the signal indicating that the payment has failed, transmit, via the at least one communication circuitry 290, to the at least one external electronic device 102 or 103, a request based on the signal indicating that the payment has failed to cause the at least one external electronic device 102 or 103 to display, on the display 261 or 263, another screen based on payment failure type information included in the signal indicating that the payment has failed.

The instructions may be configured, when executed by the at least one processor 120, to cause the first electronic device 101 to, after radiating the signal for the payment to the outside, obtain, via the at least one communication circuitry 290, a signal indicating that the payment is successful from a server 211, 213, 215, or 217 associated with the payment information. The instructions may be configured, when executed by the at least one processor 120, to cause the first electronic device 101 to, in response to obtaining the signal indicating that the payment is successful, transmit, via the at least one communication circuitry 290, to the at least one external electronic device 102 or 103, a request to cause the at least one external electronic device 102 or 103 to cease displaying the screen.

The first electronic device 101 may further comprise at least one sensor. The instructions may be configured, when executed by the at least one processor 120, to cause the first electronic device 101 to obtain, via the at least one sensor, a user gesture for the payment based on at least one card among a plurality of cards. The instructions may be configured, when executed by the at least one processor 120, to cause the first electronic device 101 to, based on the data indicating the gesture, obtain at least one piece of the payment information by authenticating the user.

The method may be performed by a first electronic device 101 comprising at least one communication circuitry 290. The method may comprise, in response to an input requesting payment, obtaining payment information related to a payment request. The method may comprise, in response to obtaining the payment information, transmitting, via at least one communication circuitry 290, to at least one external electronic device 102 or 103 different from the first electronic device 101, data including the payment information to cause the at least one external electronic device 102 or 103 to display a screen including at least one piece of payment information on a display 261 or 263 of the at least one external electronic device 102 or 103. The method may comprise radiating a payment signal for the payment based on the data including the payment information to the outside via the at least one communication circuitry 290 in response to obtaining the payment information.

As described above, a non-transitory computer readable storage medium may comprise a program storing instructions. The instructions may be configured, when executed by at least one processor 120 of a first electronic device 101 comprising at least one communication circuitry 290, to cause the first electronic device 101 to, in response to an input requesting payment, obtain payment information related to a payment request. The instructions may be configured, when executed by the at least one processor 120, to cause the first electronic device 101 to, in response to obtaining the payment information, transmit, via the at least one communication circuitry 290, to at least one external electronic device 102 or 103 different from the first electronic device 101, data including the payment information to cause the at least one external electronic device 102 or 103 to display a screen including at least one piece of payment information on a display 261 or 263 of the at least one external electronic device 102 or 103. The instructions may be configured, when executed by the at least one processor 120, to cause the first electronic device 101 to radiate a payment signal for the payment based on the data including the payment information to the outside via the at least one communication circuitry 290 in response to obtaining the payment information.

As described above, an electronic device 102 or 103 may comprise a display 261 or 263. The electronic device 102 or 103 may comprise at least one communication circuitry 291 or 293. The electronic device 102 or 103 may comprise at least one processor 221 or 223. The electronic device 102 or 103 may comprise at least one memory 231 or 233 storing instructions. The instructions may be configured, when executed by the at least one processor 221 or 223, to cause the electronic device 102 or 103 to receive, via the at least one communication circuitry 291 or 293, data including payment information from a first external electronic device 101 connected based on short-range wireless communication with the electronic device 102 or 103. The instructions may be configured, when executed by the at least one processor 221 or 223, to cause the electronic device 102 or 103 to, based on receiving the data, display, on the display 261 or 263, a screen including at least one piece of payment information. The instructions may be configured, when executed by the at least one processor 221 or 223, to cause the electronic device 102 or 103 to, while displaying the screen on the display 261 or 263, receive a request to radiate a signal for payment based on the data to the outside from the first external electronic device 101. The instructions may be configured, when executed by the at least one processor 221 or 223, to cause the electronic device 102 or 103 to, in response to receiving the request, radiate, via the at least one communication circuitry 291 or 293, the signal for the payment based on the data to the outside.

The instructions may be configured, when executed by the at least one processor 221 or 223, to cause the electronic device 102 or 103 to, based on receiving the data, identify a running application. The instructions may be configured, when executed by the at least one processor 221 or 223, to cause the electronic device 102 or 103 to, in response to the running application being a designated application, suspend displaying the screen. The instructions may be configured, when executed by the at least one processor 221 or 223, to cause the electronic device 102 or 103 to, in response to the running application being distinguished from the designated application, display the screen on the display 261 or 263.

The instructions may be configured, when executed by the at least one processor 221 or 223, to cause the electronic device 102 or 103 to receive the request based on a signal indicating that the payment has failed. The instructions may be configured, when executed by the at least one processor 221 or 223, to cause the electronic device 102 or 103 to radiate the signal generated based on payment failure type information included in the result signal indicating that the payment has failed to the outside.

The signal may be generated based on a communication protocol different from a communication protocol based on which another signal generated by the first external electronic device 101 for the payment is based.

The instructions may be configured, when executed by the at least one processor 221 or 223, to cause the electronic device 102 or 103 to receive, via the at least one communication circuitry 291 or 293, a signal indicating that the payment has failed from the first external electronic device 101. The instructions may be configured, when executed by the at least one processor 221 or 223, to cause the electronic device 102 or 103 to, in response to receiving the signal indicating that the payment has failed, via the display 261 or 263, display, via the display 261 or 263, another screen based on payment failure type information included in the signal indicating that the payment has failed, on the display 261 or 263.

The instructions may be configured, when executed by the at least one processor 221 or 223, to cause the electronic device 102 or 103 to obtain, via the at least one communication circuitry 291 or 293, a signal indicating that the payment is successful from the first external electronic device 101. The instructions may be configured, when executed by the at least one processor 221 or 223, to cause the electronic device 102 or 103 to, in response to receiving the signal indicating that the payment is successful, suspend displaying the screen.

The instructions may be configured, when executed by the at least one processor 221 or 223, to cause the electronic device 102 or 103 to, after radiating the signal for the payment to the outside, obtain, via the at least one communication circuitry 291 or 293, a signal indicating whether the payment is successful from a server associated with the payment information. The instructions may be configured, when executed by the at least one processor 221 or 223, to cause the electronic device 102 or 103 to, in response to obtaining the signal indicating whether the payment is successful, via the at least one communication circuitry 291 or 293, to the first external electronic device 101, transmit data based on the signal indicating whether the payment is successful.

The instructions may be configured, when executed by the at least one processor 221 or 223, to cause the electronic device 102 or 103 to, after radiating the signal for the payment to the outside, obtain, via the at least one communication circuitry 291 or 293, a signal indicating that the payment has failed from a server associated with the payment information. The instructions may be configured, when executed by the at least one processor 221 or 223, to cause the electronic device 102 or 103 to, in response to obtaining the signal indicating that the payment has failed, via the at least one communication circuitry 291 or 293, transmit a request to radiate a signal for the payment based on the data to the outside, to the electronic device 102 or 103 and at least one of another first external electronic device 101 associated with the first external electronic device 101.

As described above, a method may be performed by an electronic device 102 or 103 comprising a display 261 or 263, and at least one communication circuitry 291 or 293. The method may comprise receiving, via the at least one communication circuitry 291 or 293, data including payment information from a first external electronic device 101 connected based on short-range wireless communication with the electronic device 102 or 103. The method may comprise, based on receiving the data including the payment information, displaying, on the display 261 or 263, a screen including at least one piece of payment information. The method may comprise, while displaying the screen on the display 261 or 263, receiving a request to radiate a signal for payment based on the data to the outside from the external electronic device. The method may comprise, in response to receiving the request, radiating, via the at least one communication circuitry 291 or 293, the signal for the payment based on the data to the outside.

As described above, a non-transitory computer readable storage medium may comprise a program storing instructions. The instructions may be configured, when executed by at least one processor 221 or 223 of an electronic device 102 or 103 comprising a display 261 or 263 and at least one communication circuitry 291 or 293, to cause the electronic device 102 or 103 to, receive, via the at least one communication circuitry 291 or 293, data including payment information from a first external electronic device 101 connected based on short-range wireless communication with the electronic device 102 or 103. The instructions may be configured, when executed by the at least one processor 221 or 223, to cause the electronic device 102 or 103 to, based on receiving data including the payment information, display, on the display 261 or 263, a screen including at least one piece of payment information. The instructions may be configured, when executed by the at least one processor 221 or 223, to cause the electronic device 102 or 103 to, while displaying the screen on the display 261 or 263, receive a request to radiate a signal for payment based on the data to the outside from the first external electronic device 101. The instructions may be configured, when executed by the at least one processor 221 or 223, to cause the electronic device 102 or 103 to, in response to receiving the request, radiate, via the at least one communication circuitry 291 or 293, the signal for the payment based on the data to the outside.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one communication circuitry (290),
at least one processor (120), and
at least one memory (130) storing instructions,
wherein the instructions are configured, when executed by the at least one processor (120), to cause the electronic device (101) to:
in response to an input requesting payment, obtain payment information related to a payment request,
in response to obtaining the payment information, transmit, via the at least one communication circuitry (290), to at least one external electronic device (102, 103) different from the electronic device (101), data including the payment information to cause the at least one external electronic device (102, 103) to display a screen including at least one piece of payment information on a display (261, 263) of the at least one external electronic device (102, 103), and
radiate a payment signal for the payment based on the data including the payment information to the outside via the at least one communication circuitry (290) in response to obtaining the payment information.

2. The electronic device (101) of claim 1,
wherein the instructions are configured, when executed by the at least one processor (120), to cause the electronic device (101) to:
after radiating the payment signal to the outside, obtain, via the at least one communication circuitry (290), a result signal indicating that the payment has failed from a server (211, 213, 215, 217) associated with the payment information, and
in response to obtaining the result signal, transmit, to the at least one external electronic device (102, 103), a request to cause the at least one external electronic device (102, 103) to radiate another payment signal for the payment based on the data to the outside.

3. The electronic device (101) of claim 1 or claim 2,
wherein the instructions are configured, when executed by the at least one processor (120), to cause the electronic device (101) to:
in response to obtaining the result signal, select some external electronic device (102, 103) among the at least one external electronic device (102, 103) based on priority information, and
transmit, via the at least one communication circuitry (290), the request to the selected some external electronic device (102, 103).

4. The electronic device (101) of any one of claim 1 to claim 3,
wherein the instructions are configured, when executed by the at least one processor (120), to cause the electronic device (101) to:
obtain, via the at least one communication circuitry (290), another result signal indicating that the payment has failed from the selected some external electronic device (102, 103),
in response to obtaining the other result signal from the selected some external electronic device (102, 103), based on priority information, select other some external electronic device (102, 103) among the at least one external electronic device (102, 103), and
transmit, via the at least one communication circuitry (290), the request to the selected other some external electronic device (102, 103).

5. The electronic device (101) of any one of claim 1 to claim 4,
wherein the instructions are configured, when executed by the at least one processor (120), to cause the electronic device (101) to:
obtain another result signal indicating that the payment is successful from the selected some external electronic device (102, 103), and
in response to obtaining the other result signal, transmit, via the at least one communication circuitry (290), to the at least one external electronic device (102, 103), a request to cause the at least one external electronic device (102, 103) to cease displaying the screen.

6. The electronic device (101) of any one of claim 1 to claim 5,
wherein the instructions are configured, when executed by the at least one processor (120), to cause the electronic device (101) to:
based on payment failure type information included in the result signal, transmit, via the at least one communication circuitry (290), the request based on the result signal to the at least one external electronic device (102, 103) such that the other payment signal is generated in the at least one external electronic device (102, 103).

7. The electronic device (101) of any one of claim 1 to claim 6,
wherein the instructions are configured, when executed by the at least one processor (120), to cause the electronic device (101) to:
radiate, via the at least one communication circuitry (290), the payment signal based on a first communication protocol to the outside,
in response to obtaining the result signal, select some external electronic device (102, 103) among the at least one external electronic device (102, 103) capable of generating the other payment signal based on a second communication protocol different from the first communication protocol, and
transmit, via the at least one communication circuitry (290), the request to the selected some external electronic device (102, 103).

8. The electronic device (101) of any one of claim 1 to claim 7,
wherein the instructions are configured, when executed by the at least one processor (120), to cause the electronic device (101) to:
after radiating the payment signal to the outside, obtain, via the at least one communication circuitry (290), a result signal indicating that the payment has failed from a server (211, 213, 215, 217) associated with the payment information, and
in response to obtaining the result signal, transmit, via the at least one communication circuitry (290), to the at least one external electronic device (102, 103), a request based on the result signal to cause the at least one external electronic device (102, 103) to display, on the display (261, 263), another screen based on payment failure type information included in the result signal.

9. The electronic device (101) of any one of claim 1 to claim 8,
wherein the instructions are configured, when executed by the at least one processor (120), to cause the electronic device (101) to:
after radiating the payment signal to the outside, obtain, via the at least one communication circuitry (290), a result signal indicating that the payment is successful from a server (211, 213, 215, 217) associated with the payment information, and
in response to obtaining the result signal, transmit, via the at least one communication circuitry (290), to the at least one external electronic device (102, 103), a request to cause the at least one external electronic device (102, 103) to cease displaying the screen.

10. The electronic device (101) of any one of claim 1 to claim 9, further comprising at least one sensor,
wherein the instructions are configured, when executed by the at least one processor (120), to cause the electronic device (101) to:
obtain, via the at least one sensor, a user gesture for the payment based on at least one card among a plurality of cards, and
based on the data indicating the gesture, obtain at least one piece of the payment information by authenticating the user.

11. An electronic device (102, 103) comprising:
a display (261, 263),
at least one communication circuitry (291, 293),
at least one processor (221, 223), and
at least one memory (231, 233) storing instructions,
wherein the instructions are configured, when executed by the at least one processor (221, 223), to cause the electronic device (102, 103) to:
receive, via the at least one communication circuitry (291, 293), data including payment information from an external electronic device (101) connected based on short-range wireless communication with the electronic device (102, 103),
based on the receiving, display, on the display (261, 263), a screen including at least one piece of payment information,
while displaying the screen on the display (261, 263), receive a request to radiate a payment signal for payment based on the data to the outside from the external electronic device (101), and
in response to receiving the request, radiate, via the at least one communication circuitry (291, 293), the payment signal to the outside.

12. The electronic device (102, 103) of claim 11,
wherein the instructions are configured, when executed by the at least one processor (221, 223), to cause the electronic device (102, 103) to:
based on receiving the data, identify a running application,
in response to the running application being a designated application, suspend displaying the screen, and
in response to the running application being distinguished from the designated application, display the screen on the display (261, 263).

13. The electronic device (102, 103) of claim 11 or claim 12,
wherein the instructions are configured, when executed by the at least one processor (221, 223), to cause the electronic device (102, 103) to:
receive the request based on a result signal indicating that the payment has failed, and
radiate the payment signal generated based on payment failure type information included in the result signal to the outside.

14. The electronic device (102, 103) of any one of claim 11 to claim 13,
wherein the payment signal is generated based on a communication protocol different from a communication protocol based on which another payment signal generated by the external electronic device (101) for the payment is based.

15. A method performed by an electronic device (101) comprising at least one communication circuitry (290), the method comprising:
in response to an input requesting payment, obtaining payment information related to a payment request,
in response to obtaining the payment information, transmitting, via at least one communication circuitry (290), to at least one external electronic device (102, 103) different from the electronic device (101), data including the payment information to cause the at least one external electronic device (102, 103) to display a screen including at least one piece of payment information on a display (261, 263) of the at least one external electronic device (102, 103), and
radiating a payment signal for the payment based on the data including the payment information to the outside via the at least one communication circuitry (290) in response to obtaining the payment information.
